# EUROPEAN PATENT APPLICATION

(11) **EP 4 683 311 A1**
(43) Date of publication of application: **21.01.2026**
(21) Application number: 24850469.8
(22) Date of filing: 29.02.2024
(51) Int. Cl.: H04M 1/72454

(54) **INTERFACE DISPLAY METHOD, TERMINAL DEVICE AND STORAGE MEDIUM**

(30) Priority: 08.08.2023 CN 202310997202
(71) Applicant: Honor Device Co., Ltd., Shenzhen, Guangdong 518040 (CN)
(72) Inventor: ZHEN, Pengliang, Shenzhen, Guangdong 518040 (CN); LI, Chunjie, Shenzhen, Guangdong 518040 (CN); PENG, Yalong, Shenzhen, Guangdong 518040 (CN)
(74) Representative: Isarpatent
(86) International application number: PCT/CN2024/079449
(87) International publication number: WO 2025/030809

(57) **Abstract**

This application provides an interface display method, a terminal device, and a storage medium, and relates to the field of multi-screen terminal technologies. According to the method, when a secondary screen of a terminal device displays an interface of an application and an auto-rotation function is enabled, data collected by a main acceleration sensor disposed on a body on which a main screen is located is replaced with data collected by a secondary acceleration sensor disposed on a body on which the secondary screen is located. In this way, without changing a transmission path of data collected by a main sensor, a data identifier that is of the main sensor that carries secondary sensor data is transmitted to the application, and the application can determine, based on the secondary sensor data carried in the received data identifier of the main sensor, a display direction of content on the interface displayed on the secondary screen. In this manner, when a third-party application adapted to a multi-screen terminal is developed, a correct auto-rotation function can be achieved without changing display logic originally on a singlescreen terminal.

## Description

This application claims priority to Chinese Patent Application No. 202310997202.7, filed with the China National Intellectual Property Administration on August 8, 2023 and entitled "INTERFACE DISPLAY METHOD, TERMINAL DEVICE, AND STORAGE MEDIUM", which is incorporated herein by reference in its entirety.

### TECHNICAL FIELD

Embodiments of this application relate to the field of multi-screen terminal technologies, and in particular, to an interface display method, a terminal device, and a storage medium.

### BACKGROUND

Mobile phones are increasingly popular as mobile terminals, and people have increasing demands for large-screen mobile phones. As a screen is enlarged, a plane area of a mobile phone becomes larger, and consequently, the mobile phone is inconvenient to carry. Therefore, a foldable-screen mobile phone that considers both portability and a screen requirement is increasingly popular.

However, when a foldable-screen mobile phone is used, interface content displayed on a main screen can be displayed in a correct direction based on rotation of the main screen. For example, from a viewing angle of a user, an icon is displayed vertically in a forward direction. An interface displayed on a secondary screen may often be displayed in an incorrect direction based on rotation of the secondary screen. For example, the icon is displayed vertically in an inverted direction from the viewing angle of the user.

### SUMMARY

Embodiments of this application provide an interface display method, a terminal device, and a storage medium, so that when a display screen of a terminal device displays an interface, as the display screen rotates, content on the interface displayed on the display screen also rotates correctly.

To achieve the foregoing objective, the following technical solutions are used in this application.

According to a first aspect, an embodiment of this application provides an interface display method, applied to a terminal device. The terminal device includes a first sensor, a second sensor, and a display screen. The display screen includes a first screen and a second screen. When the terminal device is unfolded, the first sensor is located below the first screen, the second sensor is located below the second screen, and display directions of the first screen and the second screen are the same. When the terminal device is folded, the display directions of the first screen and the second screen are opposite. The method includes:

The terminal device displays a first interface of a first application on the first screen.

The terminal device obtains, through the first application in a process of displaying the first interface on the first screen, data collected by the first sensor.

The terminal device rotates, in a process of rotating the first screen anticlockwise by 90°, a first icon on the first interface clockwise by 90° relative to the first screen based on the data collected by the first sensor.

The terminal device receives a first operation of switching to the second screen for displaying the first application.

The terminal device displays a second interface of the first application on the second screen in response to the first operation, where the second interface is an interface obtained after the first interface is adapted to the second screen, and the second interface includes the first icon.

The terminal device obtains, through the first application in a process of displaying the second interface on the second screen, data collected by the second sensor.

The terminal device rotates, in a process of rotating the second screen anticlockwise by 90°, the first icon on the second interface clockwise by 90° relative to the second screen based on the data collected by the second sensor.

In this application, a limitation that the first screen is rotated anticlockwise by 90° does not mean that a multi-screen terminal displays, only when the first screen is rotated anticlockwise by 90°, the interface of the first application horizontally on the first screen based on data collected by an acceleration sensor. In addition, 90° is merely an example. During actual application, 90° merely indicates an example within a rotation range, for example, may alternatively be any angle between 80° and 100°, for example, 80°, 85°, 88°, 92°, or 95°. Certainly, 90° may alternatively be understood as an angle corresponding to that display on the first screen is switched from a vertical direction to a horizontal direction, or an angle corresponding to that display on the first screen is switched from the horizontal direction to the vertical direction.

Similarly, for a limitation that the second screen is rotated anticlockwise by 90°, refer to the foregoing descriptions.

Certainly, anticlockwise is merely an example, and during actual application, clockwise rotation may alternatively be performed. For example, anticlockwise rotation by 90° is equivalent to clockwise rotation by 270°, and clockwise rotation by 90° is equivalent to anticlockwise rotation by 270°.

A rotation direction of an icon is opposite to a rotation direction of a screen, a rotation angle of the icon is close to a rotation angle of the screen, but a rotation angle of the icon relative to the screen is 90°, 180°, 270°, or 360°.

When a plurality of angles may be presented between the two screens (or two regions of the display screen), when content on the interface is displayed on the first screen, a display direction of the content on the interface may be determined by the sensor below the first screen. When the first screen rotates, the content on the interface displayed on the first screen rotates in an opposite direction, and from a viewing angle of a user, the content on the interface may remain to be displayed vertically in a forward direction. When the content on the interface is displayed on the second screen, the display direction of the content on the interface may be determined by the sensor below the second screen. When the second screen rotates, the content on the interface displayed on the second screen rotates in an opposite direction, and from the viewing angle of the user, the content on the interface may remain to be displayed vertically in the forward direction.

In an implementation of the first aspect of this application, that the terminal device obtains, through the first application in a process of displaying the first interface on the first screen, data collected by the first sensor includes:
The terminal device obtains the data collected by the second sensor, where the data collected by the second sensor is second data.

The terminal device obtains the data collected by the first sensor, where the data collected by the first sensor is first data.

If the first interface of the first application is displayed on the first screen, the terminal device obtains, through the first application, the data collected by the first sensor.

That the terminal device obtains, through the first application in a process of displaying the second interface on the second screen, data collected by the second sensor includes:
The terminal device obtains the data collected by the second sensor, where the data collected by the second sensor is the second data.

If the second interface of the first application is displayed on the second screen, the terminal device stores the data collected by the second sensor.

The terminal device obtains the data collected by the first sensor, where the data collected by the first sensor is the first data.

If the second interface of the first application is displayed on the second screen, the terminal device replaces the data collected by the first sensor with the stored data collected by the second sensor, to obtain replaced data of the first sensor, where the replaced data of the first sensor is the second data collected by the second sensor.

The terminal device obtains the replaced data of the first sensor through the first application.

In this application, because only one sensor can register with the terminal device, the first sensor below the first screen is used as a registered sensor. When the first screen displays an interface, the data collected by the registered first sensor is obtained. When the second screen displays an interface, the data collected by the first sensor is replaced with the data collected by the second sensor. In this way, obtained data is the replaced data of the first sensor, and actually is the data collected by the second sensor.

In another implementation of the first aspect of this application, the terminal device includes a first processor and a second processor. The first application runs on the first processor.

After the terminal device displays the first interface of the first application on the first screen, the method further includes:
The first processor sends first information to the second processor, where the first information indicates displaying on the first screen.

After receiving the first information, the second processor sets a display state flag bit to a first flag, where the first flag indicates displaying on the first screen.

That the terminal device obtains, through the first application in a process of displaying the first interface on the first screen, data collected by the first sensor includes:
The second processor obtains the data collected by the second sensor, where the data collected by the second sensor is second data.

The second processor obtains the data collected by the first sensor, where the data collected by the first sensor is first data.

When the display state flag bit in the second processor is the first flag, the second processor sends the data collected by the first sensor to the first application of the first processor.

The first application of the first processor obtains the data collected by the first sensor.

In this application, the first processor is an application processor, and the second processor processes the data collected by the sensor. The first processor is configured to monitor whether displaying is performed on the first screen or the second screen, and send a detected display state to the second processor. The second processor is configured to set the display state flag bit based on the received display state, and determine, based on the display state flag bit, whether to perform an operation of replacing the data collected by the first sensor with the data collected by the second sensor. The display state may be changed when the display state is switched in such a manner of the display state flag bit. Before the display state is changed, each time receiving the data collected by the sensor, the second processor may determine, based on the display state, whether to perform a replacement operation.

In another implementation of the first aspect of this application, after the terminal device displays the second interface of the first application on the second screen, the method further includes:
The first processor sends second information to the second processor, where the second information indicates displaying on the second screen.

After receiving the second information, the second processor sets a display state flag bit to a second flag, where the second flag indicates displaying on the second screen.

That the terminal device obtains, through the first application in a process of displaying the second interface on the second screen, data collected by the second sensor includes:
The second processor obtains the data collected by the second sensor, where the data collected by the second sensor is second data.

When the display state flag bit in the second processor is the second flag, the second processor stores the data collected by the second sensor.

The second processor obtains the data collected by the first sensor, where the data collected by the first sensor is first data.

When the display state flag bit in the second processor is the second flag, the second processor replaces the data collected by the first sensor with the stored data collected by the second sensor, where replaced data of the first sensor is the second data collected by the second sensor.

The second processor sends the replaced data of the first sensor to the first application of the first processor.

The first application of the first processor obtains the replaced data of the first sensor.

In this application, when the display state flag bit is the second flag, secondary-screen display may be determined, and an operation of replacing the data collected by the second sensor with the data collected by the second sensor may be performed.

In another implementation of the first aspect of this application, when the terminal device is folded, data that is of the first sensor and that is in a first direction and data that is of the second sensor and that is in the first direction have a same value and opposite directions, data that is of the first sensor and that is in a second direction and data that is of the second sensor and that is in the second direction have a same value and opposite directions, and data that is of the first sensor and that is in a third direction and data that is of the second sensor and that is in the third direction have a same value and a consistent direction.

That the terminal device obtains, through the first application in a process of displaying the first interface on the first screen, data collected by the first sensor includes:
The terminal device obtains the data collected by the second sensor, where the data collected by the second sensor is second data.

The terminal device obtains the data collected by the first sensor, where the data collected by the first sensor is first data.

If the first interface of the first application is displayed on the first screen, the terminal device obtains, through the first application, the data collected by the first sensor.

That the terminal device obtains, through the first application in a process of displaying the second interface on the second screen, data collected by the second sensor includes:
The terminal device obtains the data collected by the second sensor, where the data collected by the second sensor is the second data.

The terminal device obtains the data collected by the first sensor, where the data collected by the first sensor is the first data.

If the second interface of the first application is displayed on the second screen, the terminal device performs direction reversing on the data in the first direction and the data in the second direction that are in the data collected by the first sensor.

The terminal device obtains, through the first application, data obtained by performing direction reversing on the data collected by the first sensor.

In this application, the first direction and the second direction may be directions represented by an x axis and a z axis in the foregoing embodiments, and the third direction may be a direction represented by a y axis in the foregoing embodiments. In a folded state, data on the x axis and data on the z axis that are in data collected by two acceleration sensors are both reversed in positive and negative directions, and data on the y axis is the same. Therefore, it may be set that an operation of replacing the data of the first sensor with the data of the second sensor is implemented through a reversing operation on the directions on the x axis and the z axis.

When the first screen and the second screen are in a folded state, the data collected by the first sensor is in correlation with the data collected by the second sensor. For example, data in some directions has a same value and opposite directions. Therefore, the data collected by the second sensor may be generated in a direction reversing manner by using the data collected by the first sensor.

In another implementation of the first aspect of this application, the terminal device includes a first processor and a second processor. The first application runs on the first processor. After the terminal device displays the second interface of the first application on the second screen, the method further includes:
The first processor sends second information to the second processor, where the second information indicates displaying on the second screen.

After receiving the second information, the second processor sets a display state flag bit to a second flag, where the second flag indicates displaying on the second screen.

That the terminal device obtains, through the first application in a process of displaying the second interface on the second screen, data collected by the second sensor includes:
The second processor obtains the data collected by the second sensor, where the data collected by the second sensor is second data.

The second processor obtains the data collected by the first sensor, where the data collected by the first sensor is first data.

When the display state flag bit in the second processor is the second flag, the second processor performs direction reversing on data in a first direction and data in a second direction that are in the data collected by the first sensor.

The second processor sends, to the first application of the first processor, data obtained by performing direction reversing on the data collected by the first sensor.

The first application of the first processor obtains the data obtained by performing direction reversing on the data collected by the first sensor.

When the data collected by the second sensor is generated in a manner of reversing the direction of the data collected by the first sensor, whether to perform the direction reversing operation may alternatively be determined based on the display state flag bit.

In another implementation of the first aspect of this application, the first interface of the first application includes a first screen switching button, and the first operation is an operation performed on the first screen switching button.

Alternatively, the first operation is a gesture operation performed on the first screen.

Alternatively, a system menu bar includes a second screen switching button, and the first operation is an operation performed on the second screen switching button.

In this application, in the multi-screen terminal, diversified manners are provided to switch an interface of an application between the first screen and the second screen.

In another implementation of the first aspect of this application, the method further includes:
After the first application is started, the terminal device obtains the first data collected by the first sensor in a first time period, and the terminal device obtains the second data collected by the second sensor in the first time period.

Alternatively, after receiving a second operation, the terminal device obtains the first data collected by the first sensor in a first time period, and the terminal device obtains the second data collected by the second sensor in the first time period, where the second operation is an operation performed on an auto-rotation button in a system menu bar.

In this application, an auto-rotation function may be enabled by using the system menu bar, or the auto-rotation function may be enabled by starting an application that may have a landscape scenario. After the auto-rotation function is enabled, the first sensor and the second sensor may collect data in a same event period.

In another implementation of the first aspect of this application, after the terminal device displays the second interface of the first application on the second screen in response to the first operation, the method further includes:
The terminal device receives a third operation.

The terminal device turns off the display screen in response to the third operation.

The terminal device receives a fourth operation.

The terminal device turns on the display screen in response to the fourth operation, and displays the second interface of the first application on the second screen.

The terminal device obtains, through the first application in a process of displaying the second interface on the second screen, the data collected by the second sensor.

The terminal device rotates, in a process of rotating the second screen anticlockwise by 90°, the first icon on the second interface clockwise by 90° relative to the second screen based on the data collected by the second sensor.

In this application, the third operation and the fourth operation may be operations in which a user taps/clicks a physical key on the terminal device, and the physical key is used for turning off a screen and turning on the screen. In an example, when the terminal device is in a secondary-screen display state, the user taps/clicks the physical key, and the terminal device turns off a main screen and a secondary screen. When the terminal device is in a screen-off state, the user taps/clicks the physical key. If an interface of an application is displayed on the secondary screen before the screen turns off last time, the terminal device turns on the secondary screen in response to an operation of tapping/clicking the physical key, and continues to display, on the secondary screen, the interface of the application displayed before the screen turns off last time. If the interface of the application is displayed on the second screen, and if the screen is turned on again after the screen is turned off, the second screen is still turned on, and the interface of the application continues to be displayed on the second screen. In addition, a display manner of content on the interface needs to be determined based on the data collected by the second sensor.

In another implementation of the first aspect of this application, the terminal device includes the first processor and the second processor, and the first application runs on the first processor.

After the terminal device displays the second interface of the first application on the second screen in response to the first operation, the method further includes:

The first processor sets a display state to a first state, where the first state indicates displaying on the second screen.

After setting the display state to the first state, the first processor sends a start instruction and second information to the second processor, where the second information indicates displaying on the second screen.

After receiving the second information, the second processor sets the display state flag bit to the second flag.

After receiving the start instruction, the second processor starts a replacement operation, where the replacement operation is an operation of replacing, when the display state flag bit is the second flag, the data collected by the first sensor with the data collected by the second sensor.

In this application, the display state may be set in the first processor, and the display state may also be set in the second processor. The display state in the second processor is updated with the display state in the first processor. When the first screen is switched to the second screen for display, the display state in the first processor is updated to the first state. Similarly, the display state in the second processor is updated to the first state.

In another implementation of the first aspect of this application, after the terminal device turns off the display screen, the method further includes:
The first processor maintains the display state as the first state.

The first processor sends a stop instruction to the second processor.

After receiving the stop instruction, the second processor stops the replacement operation.

After the terminal device displays the second interface of the first application on the second screen in response to the fourth operation, the method further includes:
The first processor queries that the display state is the first state.

The first processor sends a start instruction to the second processor based on the first state that is found.

After receiving the start instruction, the second processor starts a replacement operation.

That the terminal device obtains, through the first application in a process of displaying the second interface on the second screen, the data collected by the second sensor includes:
After the replacement operation is started, if the display state flag bit is the second flag, the second processor replaces the data collected by the first sensor with the data collected by the second sensor.

The second processor sends replaced data of the first sensor to the first processor.

In this application, when a display state of the second screen is updated to screen-off, the display state in the first processor may not be updated. Similarly, the display state in the second processor does not need to be updated either. However, to prevent the second processor from continuing to perform the operation of replacing the data collected by the first sensor with the data collected by the second sensor, the first processor may send the stop instruction to the second processor, to stop the replacement operation. Even though a display state identifier bit in the second processor is the second flag, when a replacement function is disabled, the replacement operation is not performed.

In another implementation of the first aspect of this application, after the terminal device turns off the display screen, the method further includes:
The first processor sets the display state to a second state, where the second state indicates displaying on the first screen.

The first processor sends a stop instruction and first information to the second processor.

After receiving the stop instruction, the second processor stops the replacement operation.

After receiving the first information, the second processor sets the display state flag bit to a first flag.

After the terminal device displays the second interface of the first application on the second screen in response to the fourth operation, the method further includes:
The first processor sets the display state to the first state.

After setting the display state to the first state, the first processor sends a start instruction and second information to the second processor.

After receiving the second information, the second processor sets the display state flag bit to the second flag.

After receiving the start instruction, the second processor starts a replacement operation.

In this application, the display state in the first processor may alternatively be set to be updated in real time. For example, when a display state of the second screen is updated to screen-off, the display state in the first processor is updated to first-screen display. Similarly, the display state in the second processor also needs to be updated, and the display state flag bit in the second processor is updated to the first flag. In this case, it can be avoided that the operation of replacing the data collected by the first sensor with the data collected by the second sensor continues to be performed. Certainly, during actual application, when displaying is not performed on the second screen, the first processor sends the stop instruction to the second processor. In dual manners, it is ensured that in a screen-off state, the replacement operation is not performed.

In another implementation of the first aspect of this application, that the terminal device obtains, through the first application in a process of displaying the second interface on second screen, the data collected by the second sensor includes:
After the replacement operation is started, if the display state flag bit is the second flag, the second processor replaces the data collected by the first sensor with the data collected by the second sensor.

The second processor sends replaced data of the first sensor to the first processor, where the replaced data of the first sensor is the data collected by the second sensor.

The first processor obtains the replaced data of the first sensor through the first application.

In this application, only when the replacement operation starts and the display state flag bit is the second flag, the second processor performs the operation of replacing the data collected by the first sensor with the data collected by the second sensor, so that when displaying is performed on the second screen, a display direction of content on an interface displayed on the second screen is determined based on the data collected by the second sensor below the second screen. According to a second aspect, a terminal device is provided, including a processor. The processor is configured to run a computer program stored in a memory, to implement the method according to any one of the implementations of the first aspect of this application.

According to a third aspect, a chip system is provided, including a processor. The processor is coupled to a memory, and the processor executes a computer program stored in the memory, to implement the method according to any one of the implementations of the first aspect of this application.

According to a fourth aspect, a computer-readable storage medium is provided. The computer-readable storage medium stores a computer program. When the computer program is executed by one or more processors, the method according to any one of the implementations of the first aspect of this application is implemented.

According to a fifth aspect, an embodiment of this application provides a computer program product. When the computer program product runs on a device, the device is enabled to perform the method according to any one of the implementations of the first aspect of this application.

It may be understood that, for beneficial effects of the second aspect to the fifth aspect, reference may be made to related descriptions in the first aspect, and details are not described herein again.

### BRIEF DESCRIPTION OF DRAWINGS

FIG. 1 is a schematic diagram of a hardware structure of a terminal device according to an embodiment of this application;
FIG. 2 is a schematic diagram of a front structure of a terminal device according to an embodiment of this application;
FIG. 3 is a schematic diagram of a back structure of a terminal device according to an embodiment of this application;
FIG. 4 is a schematic diagram of folding of a terminal device according to an embodiment of this application;
FIG. 5 is a schematic diagram of an interface of a camera application displayed on a main screen according to an embodiment of this application;
FIG. 6 is a schematic diagram of an interface of a camera application on a main screen rotated anticlockwise by 90° according to an embodiment of this application;
FIG. 7 is a schematic diagram of an interface of a camera application displayed on a secondary screen according to an embodiment of this application;
FIG. 8 is a schematic diagram of an interface of a secondary screen rotated anticlockwise by 90° according to an embodiment of this application;
FIG. 9 is a schematic diagram of a structure of a main sensor and a secondary sensor in a terminal device according to an embodiment of this application;
FIG. 10 is a schematic diagram of directions of data collected by a main sensor and a secondary sensor in a folded state according to an embodiment of this application;
FIG. 11 is a schematic diagram of another structure of a terminal device according to an embodiment of this application;
FIG. 12 is a diagram of a technical architecture of a terminal device interface display method according to an embodiment of this application;
FIG. 13 is a sequence diagram of a terminal device interface display method according to an embodiment of this application;
FIG. 14 is a schematic diagram of a correct interface displayed on a secondary screen after the secondary screen is rotated anticlockwise by 90° according to an embodiment of this application;
FIG. 15A and FIG. 15B are a sequence diagram of another terminal device interface display method according to an embodiment of this application; and
FIG. 16A and FIG. 16B are a sequence diagram of another terminal device interface display method according to an embodiment of this application.

### DESCRIPTION OF EMBODIMENTS

In the following descriptions, for description rather than limitation, specific details such as particular system structures and technologies are provided to facilitate thorough understanding of embodiments of this application. However, it should be clear to a person skilled in the art that this application may also be implemented in other embodiments without these specific details.

It should be understood that the term "include" used in the specification and the appended claims of this application indicates presence of a described feature, entirety, step, operation, element, and/or component, but does not exclude presence or addition of one or more other features, entireties, steps, operations, elements, components, and/or sets thereof.

It should be further understood that in embodiments of this application, "one or more" means one, two, or more, and "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

In addition, in the description of the specification and the appended claims of this application, the terms "first", "second", "third", "fourth", and the like are merely used for a purpose of distinguishing descriptions and cannot be understood as indicating or implying relative importance.

Reference to "an embodiment", "some embodiments", or the like described in the specification of this application means that a specific feature, structure, or characteristic described with reference to this embodiment is included in one or more embodiments of this application. Therefore, the statements such as "in an embodiment", "in some embodiments", "in some other embodiments", and "in some further embodiments" that appear in different parts of this application do not necessarily refer to a same embodiment, but mean "one or more but not all embodiments", unless otherwise specifically emphasized in another manner. The terms "comprise", "include", "have", and variants thereof all mean "include but are not limited to" unless otherwise specifically emphasized in another manner.

An interface display method provided in embodiments of this application may be applied to a terminal device. A type of the terminal device may be a tablet computer, a mobile phone, a wearable device, a notebook computer, an ultra-mobile personal computer (ultra-mobile personal computer, UMPC), a netbook, a personal digital assistant (personal digital assistant, PDA), or the like. The foregoing terminal device may include at least two screens in any form, and therefore, may be denoted as a multi-screen terminal. A specific type of the multi-screen terminal is not limited in embodiments of this application.

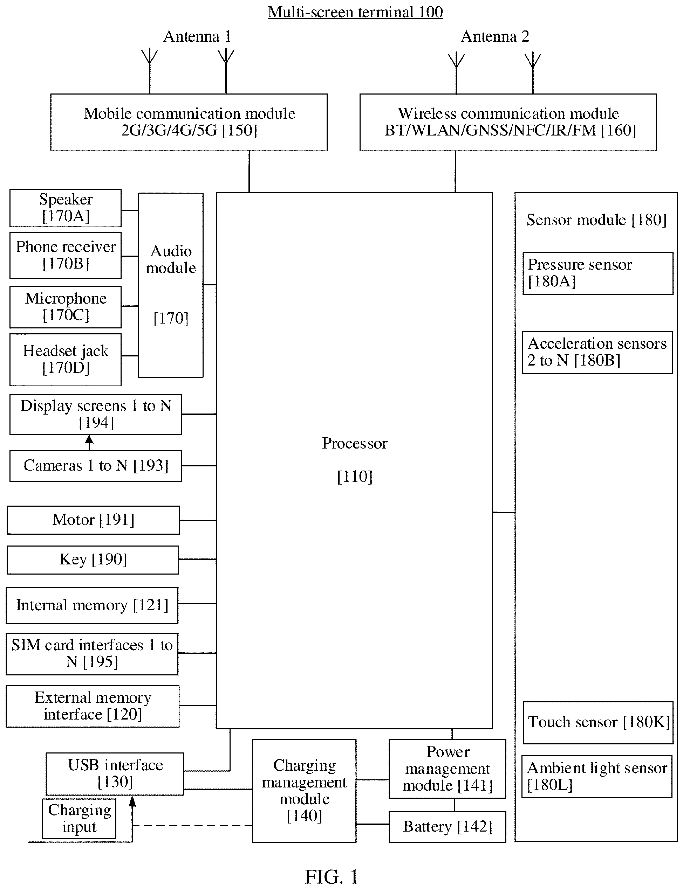

FIG. 1 is a schematic diagram of a structure of a terminal device. A multi-screen terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, a camera 193, a display screen 194, a subscriber identification module (subscribe identification module, SIM) card interface 195, and the like. The sensor module 180 may include a pressure sensor 180A, a touch sensor 180K, an ambient light sensor 180L, at least two acceleration sensors, and the like.

It may be understood that the structure shown in this embodiment of this application does not constitute a specific limitation on the multi-screen terminal 100. In some other embodiments of this application, the multi-screen terminal 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a coprocessor (sensor coprocessor, SCP), a baseband processor, a neural-network processing unit (neural-network processing unit, NPU), and/or the like. Different processing units may be independent devices, or may be integrated into one or more processors.

The controller may be a nerve center and a command center of the multi-screen terminal 100. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeat access and reduces waiting time of the processor 110, so that system efficiency is improved.

The USB interface 130 is an interface that complies with a USB standard specification, and may be specifically a Mini USB interface, a Micro USB interface, a USB Type C interface, or the like. The USB interface 130 may be configured to be connected to a charger to charge the multi-screen terminal 100, or may be configured to transmit data between the multi-screen terminal 100 and a peripheral device.

It may be understood that, interface connection relationships between the modules shown in embodiments of this application are merely schematic descriptions and do not constitute a limitation on the structure of the multi-screen terminal 100. In some other embodiments of this application, the multi-screen terminal 100 may alternatively use an interface connection manner different from that in the foregoing embodiment, or use a combination of a plurality of interface connection manners.

The external memory interface 120 may be configured to connect to an external storage card, for example, a Micro SD card, to expand a storage capability of the multi-screen terminal 100. The external storage card communicates with the processor 110 through the external memory interface 120, to implement a data storage function, for example, to store files such as music and a video into the external storage card.

The internal memory 121 may be configured to store computer-executable program code, and the executable program code includes instructions. The processor 110 runs the instructions stored in the internal memory 121, to execute various functional applications and data processing of the multi-screen terminal 100. The internal memory 121 may include a program storage region and a data storage region. The program storage region may store an operating system and an application program required by at least one function (for example, a sound playing function or an image playing function).

In addition, the internal memory 121 may include a high-speed random access memory, and may further include a non-volatile memory, for example, at least one of a magnetic disk storage device, a flash memory device, or a universal flash storage (universal flash storage, UFS).

The charging management module 140 is configured to receive a charging input from a charger. The charger may be a wireless charger or a wired charger. In some embodiments of wired charging, the charging management module 140 may receive a charging input from the wired charger through the USB interface 130.

The power management module 141 is configured to connect the battery 142 and the charging management module 140 to the processor 110. The power management module 141 receives an input from the battery 142 and/or the charging management module 140, and supplies power to the processor 110, the internal memory 121, an external memory, the display screen 194, the camera 193, the wireless communication module 160, and the like.

In some other embodiments, the power management module 141 may alternatively be disposed in the processor 110. In some other embodiments, the power management module 141 and the charging management module 140 may alternatively be disposed in a same device.

A wireless communication function of the multi-screen terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the multi-screen terminal 100 may be configured to cover one or more communication frequency bands. Different antennas may further be reused to improve antenna utilization. For example, the antenna 1 may be reused as a diversity antenna of a wireless local area network. In some other embodiments, the antennas may be used in combination with a tuning switch.

The mobile communication module 150 may provide a solution for wireless communication including 2G/3G/4G/5G that is applied to the multi-screen terminal 100. The mobile communication module 150 may include at least one of a filter, a switch, a power amplifier, a low noise amplifier (low noise amplifier, LNA), and the like. The mobile communication module 150 may receive an electromagnetic wave from the antenna 1, perform processing, for example, filtering, amplification, and the like, on the received electromagnetic wave, and transmit the received electromagnetic wave to the modem processor for demodulation. The mobile communication module 150 may further amplify a signal modulated by the modem processor, and convert the signal into an electromagnetic wave by using the antenna 1 for radiation.

The wireless communication module 160 may provide a solution for wireless communication applied to the multi-screen terminal 100, including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave by using the antenna 2 for radiation.

In some embodiments, the antenna 1 of the multi-screen terminal 100 is coupled to the mobile communication module 150, and the antenna 2 is coupled to the wireless communication module 160, so that the multi-screen terminal 100 can communicate with a network and another device by using a wireless communication technology.

The multi-screen terminal 100 may implement an audio function by using the audio module 170, the speaker 170A, the phone receiver 170B, the microphone 170C, the headset jack 170D, the application processor, and the like, for example, implement music playing and sound recording.

The audio module 170 is configured to convert a digital audio signal into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as "horn", is configured to convert an electrical audio signal into a sound signal. The multi-screen terminal 100 may be used to listen to music or answer call in a hands-free mode by using the speaker 170A.

The phone receiver 170B, also referred to as an "earpiece", is configured to convert an electrical audio signal into a sound signal. When the multi-screen terminal 100 is used to answer a call or receive voice information, the phone receiver 170B may be put close to a human ear to listen to a voice.

The microphone 170C, also referred to as "mike" or "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the multi-screen terminal 100. In some other embodiments, two microphones 170C may be disposed in the multi-screen terminal 100, to monitor voice information and implement a noise reduction function. In some other embodiments, three, four, or more microphones 170C may be alternatively disposed in the multi-screen terminal 100, to collect a sound signal, implement noise reduction, recognize a sound source, implement a directional recording function, and the like. The headset jack 170D is configured to be connected to a wired headset. The headset jack 170D may be a USB interface 130, or may be a 3.5 mm open mobile multi-screen terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display screen 194. There are various types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The multi-screen terminal 100 determines pressure intensity based on the change in the capacitance. When a touch operation acts on the display screen 194, the multi-screen terminal 100 detects strength of the touch operation by using the pressure sensor 180A. The multi-screen terminal 100 may calculate a touch position based on a detection signal of the pressure sensor 180A.

The touch sensor 180K is also referred to as a "touch panel". The touch sensor 180K may be disposed on the display screen 194. The touch sensor 180K and the display screen 194 form a "touchscreen", also referred to as a "touch control screen". The touch sensor 180K is configured to detect a touch operation acting on or near the touch sensor 180K. The touch sensor may transmit the detected touch operation to the application processor, to determine a touch event type. A visual output related to the touch operation may be provided on the display screen 194. In some other embodiments, the touch sensor 180K may alternatively be disposed on a surface of the multi-screen terminal 100 at a position different from that of the display screen 194.

The ambient light sensor 180L is configured to sense ambient light brightness. The multi-screen terminal 100 may adaptively adjust brightness of the display screen 194 based on the sensed ambient light brightness. The ambient light sensor 180L may also be configured to automatically adjust white balance during photographing. The ambient light sensor 180L may further work with an optical proximity sensor 180G to detect whether the multi-screen terminal 100 is in a pocket to prevent an accidental touch.

The acceleration sensor 180B is configured to sense an acceleration force. The acceleration force is a force, for example, a gravity force, acting on a body of the multi-screen terminal in an acceleration process. A body on which each screen of the multi-screen terminal is located may be provided with an acceleration sensor. To be specific, there may be 2 to N acceleration sensors in the multi-screen terminal.

The key 190 includes a power key, a volume key, or the like. The key 190 may be a mechanical key, or may be a touch-type key. The multi-screen terminal 100 may receive a key input, generate a key signal input related to user settings and function control of the multi-screen terminal 100.

The motor 191 may generate a vibration alert. The motor 191 may be configured for an incoming call vibration prompt and a touch vibration feedback.

The multi-screen terminal 100 implements a display function by using a GPU, the display screen 194, the application processor, and the like. The GPU is a microprocessor for image processing and connects the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light-emitting diode or an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), and the like. In some embodiments, the multi-screen terminal 100 may include 1 or N display screens 194, where N is a positive integer greater than 1.

The camera 193 is configured to capture a static image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into a standard image signal in an RGB format, a YUV format, or the like. In some embodiments, the multi-screen terminal 100 may include 1 or N cameras 193, where N is a positive integer greater than 1.

The SIM card interface 195 is configured to be connected to an SIM card. The SIM card may be inserted into the SIM card interface 195 or removed from the SIM card interface 195 to implement contact and separation with the multi-screen terminal 100. The multi-screen terminal 100 supports 1 or N SIM card interfaces, where N is a positive integer greater than 1. The SIM card interface 195 supports a nano SIM card, a micro SIM card, a SIM card, and the like. A plurality of cards may be inserted into the same SIM card interface 195 together. Types of the plurality of cards may be the same or different. The SIM card interface 195 is also compatible with SIM cards of different types. The SIM card interface 195 is also compatible with an external storage card. The multi-screen terminal 100 interacts with a network by using the SIM card, to implement functions such as calling and data communication. In some embodiments, the multi-screen terminal 100 uses an eSIM, that is, an embedded SIM card. The eSIM card may be embedded in the multi-screen terminal 100, and cannot be separated from the multi-screen terminal 100.

In embodiments of this application, a specific structure of an execution entity of an interface display method is not specially limited, provided that code recoding the interface display method in embodiments of this application can be run to perform communication according to the interface display method provided in embodiments of this application. For example, the execution body of the interface display method provided in embodiments of this application may be a functional module that is in a terminal device and that can invoke a program and execute the program or a communication apparatus used in a terminal device, for example, a chip.

Mobile phones are increasingly popular as mobile terminals, and people have increasing demands for large-screen mobile phones. However, as a screen is enlarged, a plane area of a mobile phone becomes larger, and consequently, the mobile phone is inconvenient to carry. Therefore, a foldable-screen mobile phone that considers both portability and a screen requirement is increasingly popular.

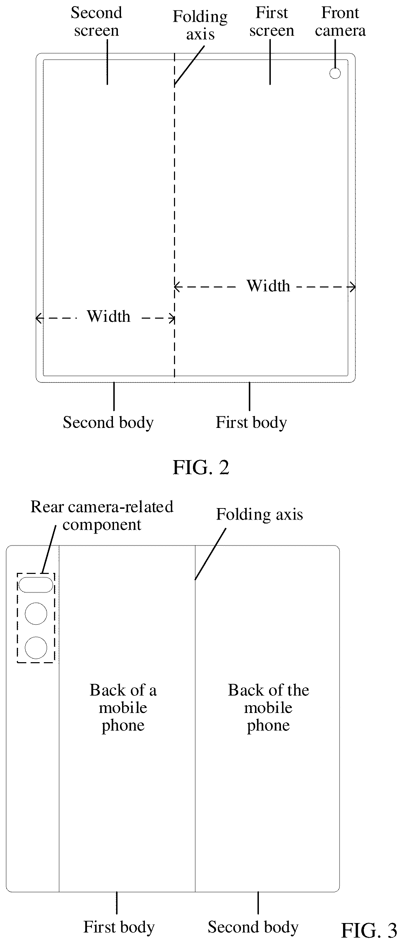

FIG. 2 is a schematic diagram of a front structure of a foldable-screen mobile phone according to an embodiment of this application.

The foldable-screen mobile phone in this embodiment of this application includes a first body and a second body. The first body is connected to the second body. The foldable-screen mobile phone may be folded along a connection part between the first body and the second body. As shown in the figure, there is a virtual folding axis between the first body and the second body. The virtual folding axis may be understood as a line generated when a plane in which the first body is located intersects with a plane in which the second body is located and when the two planes are not in a same plane. For the foldable-screen mobile phone, a width of the first body of is greater than a width of the second body. The first body and the second body are provided with a screen. When the first body and the second body are in an unfolded state, the screen on the first body and the second body are in an unfolded state. When the first body and the second body are in a folded state, the screen on the first body and the second body are in a folded state. A part of the screen located in a region of the first body is a first display region, and a part of the screen located in a region of the second body is a second display region. With a folding action or an unfolding action between the first body and the second body, the first display region and the second display region of the screen also fold or unfold. For ease of subsequent descriptions, a first display region of a display screen is denoted as a first screen, and a second display region of the display screen is denoted as a second screen. In addition, a front camera is disposed on a side that is of the first body and that is located on the first screen.

FIG. 3 is a schematic diagram of a back structure of the foldable-screen mobile phone shown in FIG. 2. A rear camera-related component is disposed on a side that is of the first body and that faces away from the first screen. Although not shown in the figure, it may be understood that the rear camera-related component may include one or more of the following: a flash, a wide-angle camera, a standard camera, a depth-of-field camera, and the like.

A folding angle between the first body and the second body of the foldable-screen mobile phone shown in FIG. 2 and FIG. 3 may be 0° to 180°. Certainly, during actual application, the folding angle may be slightly different from a set folding angle. For example, the folding angle may be greater than 180°.

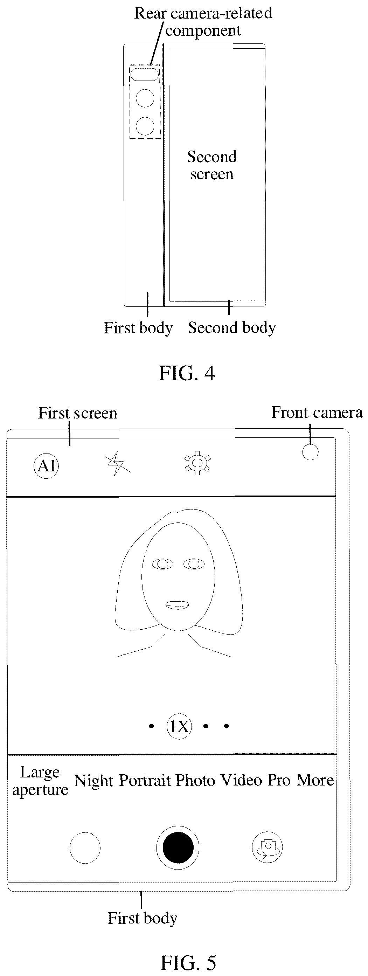

FIG. 4 is a schematic diagram of the foldable-screen mobile phone when the folding angle between the first body and the second body is 0°. The first screen on the first body and the second screen on the second body both face toward an outer side of the whole body, that is, display directions face toward an outer side of the whole body. In addition, the first screen and the second screen are in a state of facing away from each other. To be specific, the display direction of the first screen is opposite to the display direction of the second screen. When the second screen faces a user, because the width of the second body on which the second screen is located is less than the width of the first body, regions of the second screen and the first body that are not covered or obscured by the second body (for example, the rear camera-related component) may be seen from a viewing angle of the user. Similarly, when the first screen faces the user, because the width of the first body on which the first screen is located is greater than the width of the second body, the first screen may be seen from the viewing angle of the user. An example is not illustrated in this application again. It may be understood that a display direction of a screen is a direction toward which content displayed on the screen faces.

It may be understood based on the folding angle defined in FIG. 4 that the folding angle between the first body and the second body of the foldable-screen mobile phone shown in FIG. 2 and FIG. 3 is 180°. In this case, the first screen on the first body and the second screen on the second body face a same side of the whole body, that is, the display directions of the first screen and the second screen are the same.

Certainly, if a structure is properly configured and flexibility of a foldable screen meets a requirement, the folding angle between the first body and the second body may alternatively be greater than 180°.

When the folding angle between the first body and the second body is 360°, the first screen on the first body and the second screen on the second body separately face an inner side of the whole body, and the first screen and the second screen are in a state of facing each other. An example is not illustrated in this application again.

As described above, the first screen and the second screen may be two regions of a same complete screen. The first screen is a region of the complete screen, and the second screen is another region of the complete screen. The two regions of the complete screen are respectively disposed on the first body and the second body. When folding and unfolding are performed between the first body and the second body, two regions of the complete screen are also folded or unfolded. Therefore, in this screen setting manner, the complete screen needs to have good flexibility, and may be folded and unfolded for a large number of times at a connection part between the first screen and the second screen. Because content is displayed on the entire complete screen, from the viewing angle of the user, a display effect is better, and user experience is good.

In this embodiment of this application, the first screen and the second screen may alternatively be two independent screens, and the two independent screens are respectively disposed on the first body and the second body. Because the first screen and the second screen are two independent screens, the first screen and the second screen may not be flexible screens, and have low manufacturing costs. However, when content is displayed on the first screen and the second screen, a display effect is poor due to a splicing trace existing between the first screen and the second screen.

The foldable-screen mobile phone shown in FIG. 2 has the first screen and the second screen. Therefore, the user may switch content displayed on the foldable-screen mobile phone between the first screen and the second screen.

In an example of a scenario, refer to FIG. 5. When the user uses the foldable-screen mobile phone, and the user faces the first screen to take a selfie, the foldable-screen mobile phone uses the front camera, the first screen displays an interface of a camera application (where the camera application may be used as an example of a first application, and the interface shown in FIG. 5 may be used as an example of a first interface), and the interface of the camera application displays a selfie picture of the user captured by the front camera. In addition, from the viewing angle of the user, an icon on the interface of the camera application displayed on the first screen is displayed vertically in a forward direction. A forward direction and an inverted direction are directions opposite to each other. The forward direction may be a preset display direction of the icon, and the inverted direction is a direction after the icon is rotated by 180°. An example in which text or a numeral is displayed in the icon is used. Forward displaying of the icon is normal displaying of the text or the numeral, and inverted displaying of the icon is displaying in a direction after the text or the numeral is rotated by 180°.

When the user rotates the foldable-screen mobile phone by approximately 90° to cause the first screen of the foldable-screen mobile phone to be in a landscape state, some icons and the selfie picture on an interface displayed on the first screen of the foldable-screen mobile phone are rotated by 90° relative to the first screen.

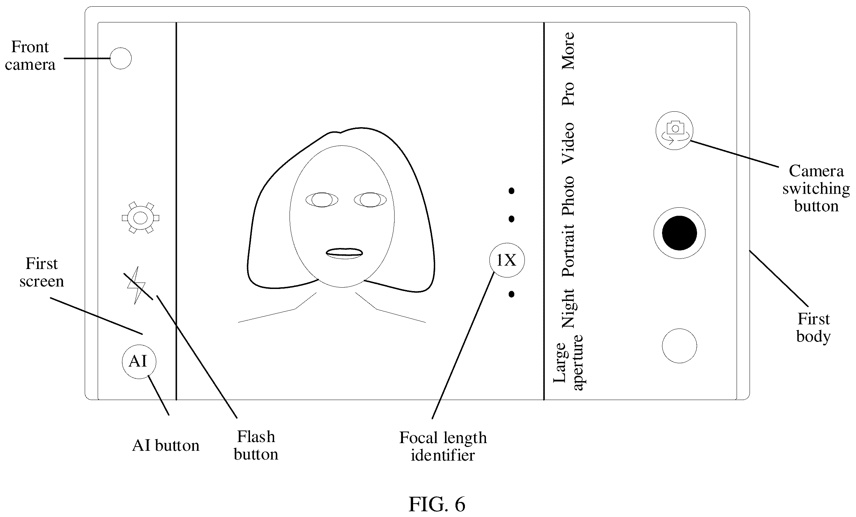

FIG. 6 is a schematic diagram of the interface displayed on the first screen of the foldable-screen mobile phone after the user rotates the foldable-screen mobile phone shown in FIG. 5 anticlockwise by approximately 90°. In the figure, virtual buttons rotate clockwise by 90° relative to the first screen. For example, an "AI button", a "flash button", a "focal length identifier", a "camera switching button", and the like are all rotated clockwise relative to the first screen. The selfie picture is also rotated clockwise by 90° relative to the first screen. After the icons and the selfie picture are rotated clockwise by 90°, from the viewing angle of the user, the icons and the selfie picture are displayed vertically in a forward direction. The "AI button", the "flash button", the "focal length identifier", the "camera switching button", or the like in the foregoing example may all be used as an example of the first icon.

Because the first screen is rotated anticlockwise by approximately 90°, and the virtual buttons and the selfie picture are rotated clockwise by 90° relative to the foldable-screen mobile phone, from the viewing angle of the user, the virtual buttons and the selfie picture do not switch from a "vertical" display state to a "horizontal" display state with the first screen. In this way, the user can obtain a good interface visual effect.

During actual application, it may be set that all display content on the interface is correspondingly rotated, or it may be set that a part of the display content is correspondingly rotated. Content that is set to be correspondingly rotated is not specifically limited in embodiments of this application.

In addition, icons of some virtual buttons are of a special symmetric structure. Therefore, from the viewing angle of the user, a display direction after rotation is the same as that before rotation. Therefore, some virtual buttons may actually rotate, but from the viewing angle of the user, the virtual buttons do not rotate.

An auto-rotation function shown in FIG. 5 and FIG. 6 is implemented based on a sensor built in a body of the foldable-screen mobile phone. The sensor is an acceleration sensor, and a display direction of content on the interface is determined based on a direction of acceleration detected by the acceleration sensor.

During actual use, regardless of photographing in a vertical direction shown in FIG. 5 or photographing in a horizontal direction shown in FIG. 6, in this scenario, the front camera is used to take a selfie, and a photographing effect of the front camera of the mobile phone is usually not as good as that of the rear camera, for example, a pixel of the front camera is not as high as that of the rear camera. Therefore, the user may switch to the second screen for displaying the interface that is of the camera application of the foldable-screen mobile phone and that is currently displayed on the first screen. In addition, the user flips the mobile phone, so that the second screen and the rear camera face the user. During specific implementation, a screen switching button (which may be denoted as a first screen switching button) may be displayed on the interface of the camera application, and the user taps the screen switching button to switch from displaying the camera application on the first screen to displaying the camera application on the second screen. In addition, a screen switching button (which may be denoted as a second screen switching button) may alternatively be set in a system menu bar (where for example, displaying of the system menu bar may be triggered by an operation of slides from top to bottom of the display screen). The user taps the screen switching button to switch from displaying the camera application on the first screen to displaying the camera application on the second screen. Certainly, the camera application may alternatively be triggered, by using a preset gesture operation, to switch from being displayed on the first screen to being displayed on the second screen. The foregoing operation may be denoted as a first operation.

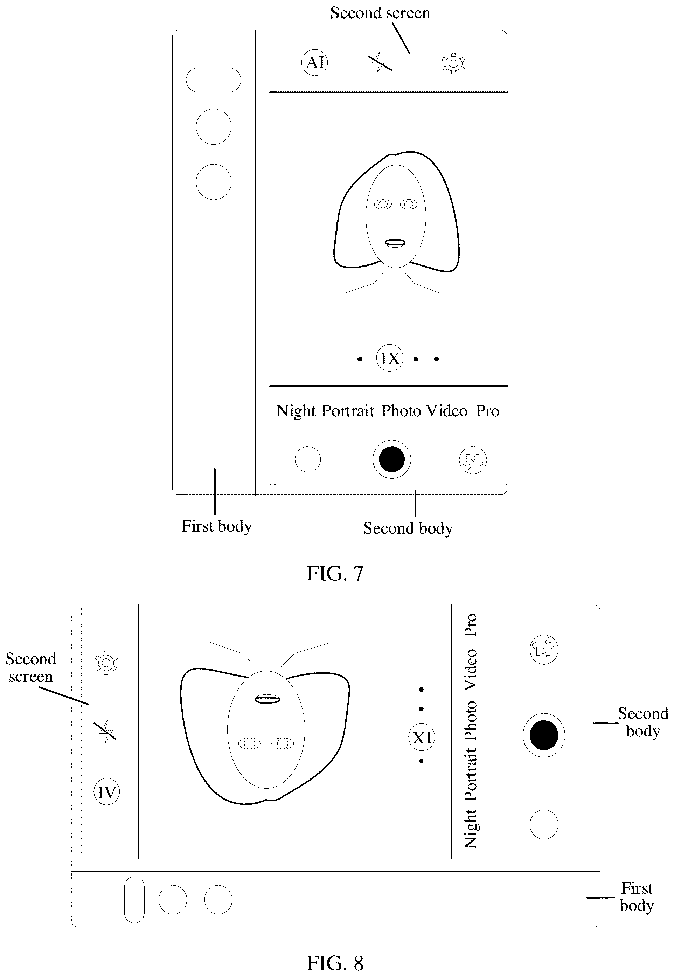

FIG. 7 is a diagram of a selfie preview when the second screen is used by the user to display the interface of the camera application.

When a same interface of a same application is displayed, the interface displayed on the first screen and the interface displayed on the second screen may be exactly the same or may be different. In an example in which the interface displayed on the first screen and the interface displayed on the second screen are different, content on the displayed interface may be adaptively adjusted based on length-width ratios of the first screen and the second screen. For example, when a width of the second screen is less than a width of the first screen, some virtual buttons in a width direction are hidden, and the user may trigger, by using a sliding gesture, a multi-screen terminal to display the hidden virtual buttons on the interface. The interface shown in FIG. 7 may be used as an example of a second interface. In comparison with those on the first interface, a "large aperture" button and a "more" button are hidden on the second interface.

When the user takes a selfie on the interface of the camera application displayed on the second screen, lateral photographing may also be performed. For example, the foldable-screen mobile phone may alternatively be rotated by approximately 90°, so that the second screen of the foldable-screen mobile phone is in a landscape state. In this case, some icons and a selfie picture on the interface displayed on the second screen of the foldable-screen mobile phone are also rotated by 90° relative to the second screen.

FIG. 8 is a schematic diagram of an interface displayed on the second screen of the foldable-screen mobile phone after the user rotates the second screen shown in FIG. 7 anticlockwise by approximately 90°. In the figure, some virtual buttons are also rotated anticlockwise by 90° relative to the second screen of the foldable-screen mobile phone. For example, the "AI button", the "focal length identifier", the "camera switching button", and the like are all rotated anticlockwise relative to the second screen of the foldable-screen mobile phone, to be displayed vertically in an inverted direction. The selfie picture is also rotated anticlockwise by 90° relative to the second screen of the foldable-screen mobile phone, to be displayed vertically in the inverted direction. From the viewing angle of the user, when the second screen is used in a landscape state, the virtual icons and the selfie picture are rotated in a wrong direction.

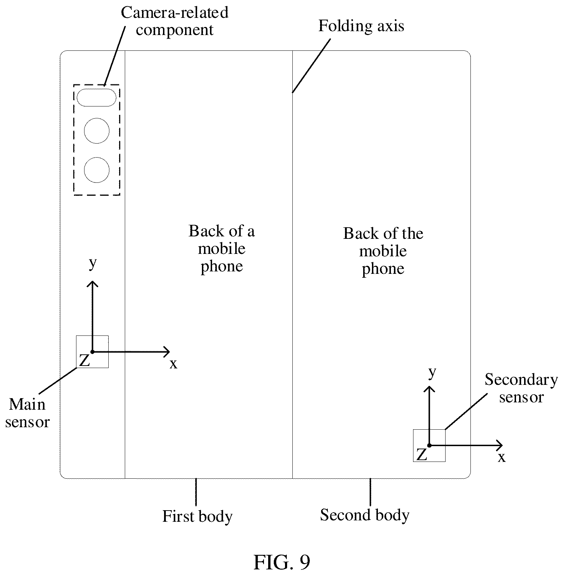

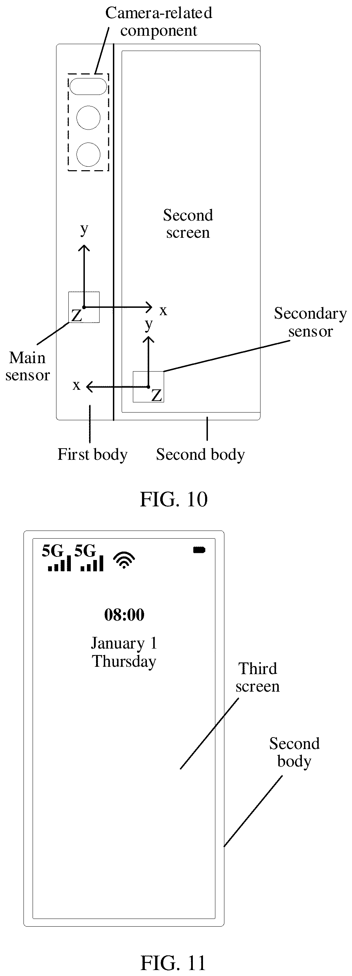

Through analysis, both the first body and the second body of the foldable-screen mobile phone may be provided with an acceleration sensor, a direction of content on the interface of the camera application displayed on the first screen of the first body is determined based on data collected by the acceleration sensor on the first body, and a direction of content on the interface of the camera application displayed on the second screen of the second body is determined based on data collected by the acceleration sensor on the second body. However, because only one acceleration sensor can register with an operating system, an upper-layer application can receive data reported by an acceleration sensor disposed on only one body (for example, the first body). In a scenario shown in FIG. 8, the display direction determined by the data collected by the acceleration sensor on the first body is exactly opposite to the display direction determined by the data collected by the acceleration sensor on the second body. Based on a process of the operating system, when the interface of the camera application is displayed on the second screen, the display direction is determined based on received data uploaded by the acceleration sensor on the first body. As a result, the content, for example, the icons, on the interface displayed on the second screen on the second body is rotated. To understand a reason of the foregoing rotation more clearly, for details, refer to descriptions of scenarios shown in FIG. 9 and FIG. 10.

FIG. 9 is a schematic diagram of a position relationship between the acceleration sensors and the bodies when the folding angle between the first body and the second body of the foldable-screen mobile phone is 180° according to an embodiment of this application.

For ease of description, the first screen disposed on the first body may be denoted as a main screen; the acceleration sensor disposed on the first body may be denoted as a main sensor or a first sensor; the second screen disposed on the second body may be denoted as a secondary screen; and the acceleration sensor disposed on the second body may be denoted as a secondary sensor or a second sensor. The main sensor is an acceleration sensor registered with the operating system.

The main sensor may detect data in three directions: data on an x axis of the main sensor, data on a y axis of the main sensor, and data on a z axis of the main sensor. Both the x axis of the main sensor and the y axis of the main sensor are parallel to a plane on which the first body is located. In an example of specific directions of the x axis of the main sensor and the y axis of the main sensor, the x axis of the main sensor is parallel to a short side of the first body and is rightward; the y axis of the main sensor is parallel to a long side of the first body and is upward; and the z axis of the main sensor is perpendicular to the plane on which the first body is located and is oriented to a side of the screen. Directional terms such as "right" and "up" are represented by using the schematic diagram of a structure shown in FIG. 9 as a basic orientation.

The secondary sensor may also detect data in three directions: data on an x axis of the secondary sensor, data on a y axis of the secondary sensor, and data on a z axis of the secondary sensor. Both the x axis of the secondary sensor and the y axis of the secondary sensor are parallel to a plane on which the second body is located. In an example of specific directions of the x axis of the secondary sensor and the y axis of the secondary sensor, the x axis of the secondary sensor is parallel to a short side of the second body and is rightward; the y axis of the secondary sensor is parallel to a long side of the second body and is upward; and the z axis of the secondary sensor is perpendicular to the plane on which the second body is located and is oriented to a side of the screen. Directional terms such as "right" and "up" are represented by using the schematic diagram of a structure shown in FIG. 9 as a basic orientation.

Any two of the three axes of the main sensor are perpendicular to each other. Alternatively, the three axes of the main sensor may not be directions shown in the embodiment shown in FIG. 9. For example, positions of the x axis of the main sensor, the y axis of the main sensor, and the z axis of the main sensor may be randomly exchanged between each other; or a direction of any one or more axes of the main sensor is opposite to the direction shown in FIG. 9 or may be any direction when it is determined that one axis is perpendicular to the plane on which the first body is located, and the other two axes are perpendicular to each other and parallel to the plane on which the first body is located. Similarly, the three axes of the secondary sensor also follow the foregoing descriptions about the directions. Usually, when the folding angle between the first body and the second body is 180°, the directions of the three axes of the main sensor are consistent with the directions of the three axes of the secondary sensor.

The acceleration sensor measures acceleration components on the foregoing three axes, and when the multi-screen terminal is in a static state, the acceleration sensor measures gravity acceleration components of gravity acceleration on the three axes.

The example of the directions of the three axes of the main sensor and the directions of the three axes of the secondary sensor shown in FIG. 9 is still used. When the folding angle between the first body and the second body is 180 degrees, a forward direction of the x axis of the main sensor is consistent with a forward direction of the x axis of the secondary sensor, for example, the two directions may be a same direction; and a forward direction of the z axis of the main sensor is consistent with a forward direction of the z axis of the secondary sensor, for example, the two directions may be a same direction. When the folding angle between the first body and the second body is another angle between 0 and 180°, the forward direction of the x axis of the main sensor is inconsistent with the forward direction of the x axis of the secondary sensor, for example, when the folding angle is 0°, the two directions are opposite directions; and the forward direction of the z axis of the main sensor is inconsistent with the forward direction of the z axis of the secondary sensor, for example, when the folding angle is 0°, the two directions are opposite directions. Regardless of the folding angle between the first body and the second body, a forward direction of the y axis of the main sensor is consistent with a forward direction of the y axis of the secondary sensor, for example, the two directions may be a same direction.

FIG. 10 is a schematic diagram of a position relationship between the acceleration sensors and the bodies when the folding angle between the first body and the second body of the foldable-screen mobile phone is 0° according to an embodiment of this application.

When the folding angle between the first body and the second body of the foldable-screen mobile phone is 0°, the forward direction of the y axis of the main sensor is consistent with the forward direction of the y axis of the secondary sensor, for example, the two directions may be a same direction; the forward direction of the x axis of the main sensor is inconsistent with the forward direction of the x axis of the secondary sensor, for example, the two directions are opposite directions; and the forward direction of the z axis of the main sensor is inconsistent with the forward direction of the z axis of the secondary sensor, for example, the two directions are opposite directions.

When the foldable-screen mobile phone is used to take a selfie in a vertical direction, data in a y-axis direction mainly functions in a display direction of content on the interface displayed on the second screen, and the forward direction of the y axis of the main sensor and the forward direction of the y axis of the secondary sensor are a same direction. Therefore, the display direction of the content on the interface displayed on the second screen in a portrait state is not affected.

When the foldable-screen mobile phone is used to take a selfie in a horizontal direction, data in an x-axis direction mainly functions in the display direction of the content on the interface displayed on the second screen, and the forward direction of the x axis of the main sensor and the forward direction of the x axis of the secondary sensor are opposite directions. Therefore, if the upper-layer application still uses data reported by the main sensor, the display direction of the content on the second screen in a landscape state may be affected.

In view of this, embodiments of this application provide a multi-screen terminal interface display method, to implement the following: when an interface is displayed on a screen of a body on which a secondary sensor is located, determining a display direction based on data collected by the secondary sensor; and when the interface is displayed on a screen of a body on which a main sensor is located, determining the display direction based on data collected by the main sensor.

In addition, it may be understood based on the foregoing descriptions that the multi-screen terminal interface display method provided in embodiments of this application is not only applicable to the foldable-screen mobile phone provided in the foregoing embodiments, but also applicable to a multi-screen terminal of the following type: a multi-screen terminal including at least two bodies each provided with a screen. Poses of the at least two bodies each provided with a screen change, so that planes on which the at least two bodies each provided with a screen may be in a non-parallel state. The at least two bodies each provided with a screen are each provided with an acceleration sensor. When the multi-screen terminal interface display method provided in embodiments of this application is applied to a terminal of this type, it may be set that when an application interface is displayed on a screen of any one of the at least two bodies each provided with a screen, a display direction of content on the interface is determined based on data provided by the acceleration sensor in the body on which the screen is located.

For another example of a terminal that may implement the multi-screen terminal interface display method provided in embodiments of this application, refer to a schematic diagram of a structure of a foldable-screen mobile phone shown in FIG. 11.

In the foldable-screen mobile phone shown in FIG. 11, when the foldable-screen mobile phone is in a folded state, a first screen on a first body and a second screen on a second body are in a state of facing each other, a third screen is further disposed on the second body, and the third screen and the second screen are in a state of facing away from each other. When an application interface is displayed on the first screen, a display direction of content on the interface is determined based on an acceleration sensor on the first body on which the first screen is located. When the application interface is displayed on the second screen or the third screen, a display direction of content on the interface is determined based on an acceleration sensor on the second body on which the second screen and the third screen are located.

A specific implementation of the multi-screen terminal interface display method provided in embodiments of this application is described below in detail by using the foldable-screen mobile phone shown in FIG. 9 and FIG. 10 as an example.

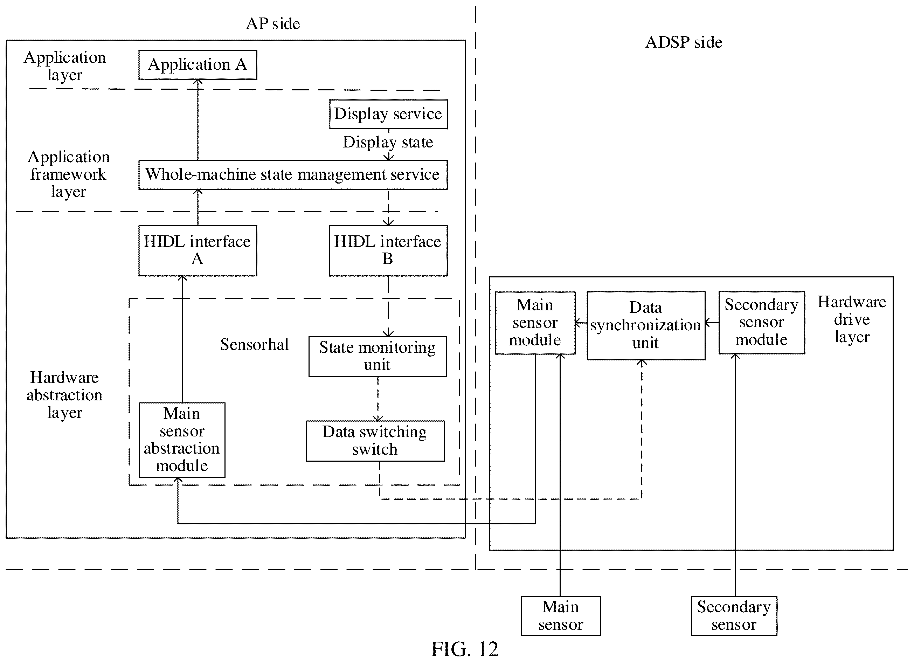

FIG. 12 is a diagram of a technical architecture of a multi-screen terminal interface display method according to an embodiment of this application. In the diagram of the technical architecture, an application chip (Application Processor, AP) side is on the left, and an ADSP chip (Analog Devices Signal Processor, ADSP) side is on the right. An AP chip is an application processor of a multi-screen terminal. An operating system, a user interface, and an application program are all executed on the AP chip. The processor may be denoted as a first processor. An ADSP chip is a chip dedicated for digital signal processing, and may be denoted as a second processor. On a main chip side, this embodiment of this application mainly relates to an application layer, an application framework layer, and a hardware abstraction layer.

An application A is located at the application layer. The application A may be some applications built in the multi-screen terminal, or may be an application installed by a user in the multi-screen terminal, or the like. In an example, the application A may be a camera application.

A display service is located at the application framework layer, is a system application or a system service, and may monitor a display state, for example, main-screen display or secondary-screen display, of a display screen of the multi-screen terminal in real time.

A whole-machine state management service is located at the application framework layer. The whole-machine state management service is for managing and maintaining a display state of the multi-screen terminal. The display state includes main-screen display and secondary-screen display, and certainly, during actual application, may further include that a screen is on, the screen is off, and so on.

A state monitoring unit, a main sensor abstraction module, and a data switching switch are located in sensorhal, and sensorhal is located at the hardware abstraction layer.

Information transmission is implemented, through an HIDL interface, between the whole-machine state management service located at the application framework layer and sensorhal located at the hardware abstraction layer. An interface configured to implement information transmission between the application framework layer and the hardware abstraction layer includes an HIDL interface A of the operating system, and further includes another HIDL interface B provided in this embodiment of this application. The HIDL interface B may be a customized interface.

The main sensor abstraction module is configured to receive acceleration data transmitted from an ADSP side and sent by a main sensor module.

The state monitoring unit is configured to monitor a display state transmitted in the application framework layer.

The data switching switch is configured to send a start instruction of a data synchronization unit to the ADSP when the secondary-screen display is switched to, and send a stop instruction of the data synchronization unit to the ADSP when the secondary-screen display is exited (where for example, the main-screen display is entered or a screen-off state is entered).

The switching to the secondary-screen display may be: A previous display state is the main-screen display, a current display state is the secondary-screen display. Alternatively, previous information is screen-off information, current information is screen-on information, and the display state is the secondary-screen display. The exiting the secondary-screen display may be: A previous display state is the secondary-screen display, and a current display state is the main-screen display. Alternatively, the previous display state is the secondary-screen display, and current information is the screen-off information.

When the interface display method provided in embodiments of this application is specifically implemented, a sensorhidl procedure in sensorhal invokes the main sensor abstraction module, the state monitoring unit, and the data switching switch to implement functions listed above of the modules.

On the ADSP chip side, the main sensor module, a secondary sensor module, and the data synchronization unit exist.

The main sensor module may receive acceleration data reported by a main sensor.

The secondary sensor module may receive acceleration data reported by a secondary sensor.

The data synchronization unit is configured to: when enabled, replace the data reported by the main sensor with the data reported by the secondary sensor during the secondary-screen display, and when disabled, not replace the data reported by the main sensor with the data reported by the secondary sensor.

On the ADSP side, the functions of the modules are implemented by using two threads.

In an example, a sensorpd-1 thread may invoke the main sensor module to receive the acceleration data reported by the main sensor, and a sensorpd-2 thread may invoke the secondary sensor module to receive the acceleration data reported by the secondary sensor. The sensorpd-1 thread may further invoke the data synchronization unit to implement the data replacement described above.

Dashed lines in the figure show a process of transmitting the display state of the multi-screen terminal. The whole-machine state management service may receive, from the application A, a display state of the application A running at a foreground, or may obtain the display state from the display service of the system. The whole-machine state management service may transmit the display state to the state monitoring unit in sensorhal through the HIDL interface B. The state monitoring unit may enable the data switching switch, to trigger the data switching switch to send the current display state to the data synchronization unit on the ADSP side, and the data synchronization unit may record a latest display state.

Solid lines in the figure show a process of transmitting sensor data to the application A. Main sensor data collected by the main sensor is reported to the main sensor module in the ADSP. Secondary sensor data collected by the secondary sensor is reported to the secondary sensor module in the ADSP. When the display state is the secondary-screen display, the data synchronization unit replaces the data reported by the main sensor with the data reported by the secondary sensor, and then the secondary sensor data is sent from the ADSP chip side to the main sensor abstraction module in sensorhal on the AP chip side (where the original main sensor data has been replaced with the secondary sensor data, and a data identifier is a registered main sensor identifier). The main sensor abstraction module in sensorhal sends the received secondary sensor data (carrying the main sensor identifier) to the whole-machine state management service through the HIDL interface A. The whole-machine state management service sends the received secondary sensor data (carrying the main sensor identifier) to the application A. Therefore, the application A determines a display direction of content on an interface based on the secondary sensor data of the received sensor identifier.

It may be understood from the diagram of the architecture that, without changing a process of transmitting the main sensor data, during the secondary-screen display, sensor data received by the application A may be the secondary sensor data, so that the display direction of the content on the interface of the application A may be normally and automatically rotated. In addition, for any third-party application, in a development process, internal implementation of a bottom layer does not need to be considered, and only data of a sensor identifier needs to be monitored according to original logic, so that a display direction of content on an interface may be adjusted based on main sensor data in a body on which a main screen is located during main-screen display, and a display direction of content on an interface may be adjusted based on secondary sensor data in a body on which a secondary screen is located during secondary-screen display.

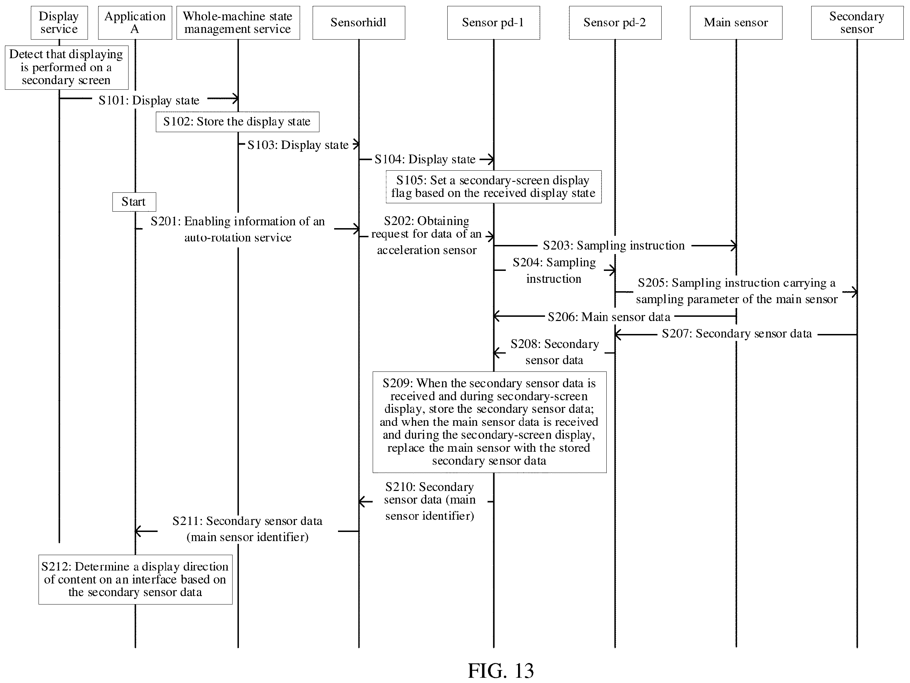

To understand a multi-screen terminal interface display method corresponding to the diagram of the architecture more clearly, FIG. 13 is a sequence diagram of the multi-screen terminal interface display method based on the diagram of the architecture.

S101: A display service sends a display state of a display screen to a whole-machine state management service.

In this embodiment of this application, as a background service program of a system, the display service (displaymanagerservice) may monitor the display state of the display screen, and when detecting that the display state changes, send a changed display state to the whole-machine state management service (for example, devicestateproviderimpl). An example in which secondary-screen display is detected is used in this embodiment of this application.

In an example, when any application switches from main-screen display to the secondary-screen display, the display service detects that the display state is switched from the main-screen display to the secondary-screen display, and may send the display state, that is, the secondary-screen display, to the whole-machine state management service; and when any application switches from the secondary-screen display to the main-screen display, the display service detects that the display state is switched from the main-screen display to the secondary-screen display, and may send the display state, that is, the main-screen display, to the whole-machine state management service. In this way, the whole-machine state management service may record a latest display state of the display screen.

Certainly, when detecting that a screen is on or the screen is off, the display service may also send a corresponding display state to the whole-machine state management service.

In an example of switching display of an application A between a main screen and a secondary screen, display may be switched between the main screen and the secondary screen by using a virtual button (for example, a screen switching button) on an interface displayed when the application A runs at a foreground, or display of the displayed interface of the application A currently running at the foreground may be switched between the main screen and the secondary screen by using a gesture operation.

Certainly, display of the interface of the application A may alternatively be switched between the main screen and the secondary screen by using a button (for example, a screen switching button in a drop-down menu) provided by the system.

When detecting that display of an application running at the foreground is switched between the main screen and the secondary screen, the display service may send a latest display state of the application running at the foreground to the whole-machine state management service.

In the foregoing embodiment, the display state includes the main-screen display and the secondary-screen display. If a multi-screen terminal includes a plurality of screens, different names or identifiers may be respectively set for the plurality of screens, and a current display state of the multi-screen terminal is determined based on the different names or identifiers.

S102: After receiving the display state sent by the display service, the whole-machine state management service stores the display state.

In this embodiment of this application, the whole-machine state management service may store the latest display state of the application A currently running at the foreground. In this embodiment of this application, the display state indicating the secondary-screen display may be denoted as a first state, and the display state indicating the main-screen display may be denoted as a second state.

S103: The whole-machine state management service sends the display state to sensorhidl.

The whole-machine state management service may send the display state to a sensorhidl procedure through an HIDL interface B.

During specific implementation, the HIDL interface B may be a customized interface with any name.

S104: After receiving the display state, the sensorhidl procedure sends the display state to a sensorpd-1 thread on an ADSP side.

The sensorhidl procedure is used as a procedure on an AP chip side, and may send the display state to the sensorpd-1 thread on the ADSP side through inter-processor communication. During specific implementation, information that is sent by an AP chip to an ADSP chip and that is carried on the secondary screen for display is denoted as second information, and information that is sent by the AP chip to the ADSP chip and that is carried on the main screen for display is denoted as first information.

S105: After receiving the display state, the sensorpd-1 thread on the ADSP side sets, based on the received display state, a display state identifier bit to a secondary-screen display flag.

sensorpd-1 in the ADSP maintains the display state identifier bit. The display state flag bit may be represented by "g_subscreen_display_state", and different characters may be used to represent different display states.

In an example, the main-screen display may be represented by using a character "1". To be specific, g_subscreen_display_state=1 indicates that the application A running at the foreground is displayed on the main screen of the multi-screen terminal, and the character may alternatively be denoted as a first flag. The secondary-screen display may be represented by using a character "100". To be specific, g_subscreen_display_state=100 indicates that the application A running at the foreground is displayed on the secondary screen of the multi-screen terminal, and the character may alternatively be denoted as a second flag. The foregoing characters are merely used as examples, and do not constitute any limitation on this application.

In this embodiment of this application, the multi-screen terminal may enable an auto-rotation function of a plurality of applications that are applicable to be installed in the multi-screen terminal. Alternatively, the auto-rotation function may be disabled. In this case, when the plurality of applications installed in the multi-screen terminal run at the foreground, content on a displayed interface does not rotate with rotation of a screen. For example, an auto-rotation button is set in a system menu bar of the multi-screen terminal, and a user may tap the auto-rotation button to enable or disable the auto-rotation function. After the auto-rotation button of the system menu bar is turned on, the plurality of applications running in the multi-screen terminal may all implement auto-rotation of content on an interface.

In addition, when the application A is a camera application, regardless of whether the multi-screen terminal enables the auto-rotation function, after the application A is started, an auto-rotation function applicable to the application A can be enabled.

In an example, when the auto-rotation button in the system menu bar is in an off state, an interface of another application B in the multi-screen terminal fails to implement auto-rotation of content. However, after the application A is started, the auto-rotation function applicable to the application A may be enabled. The application A can obtain data collected by an acceleration sensor corresponding to a screen displaying the interface of the application A, and the application A can determine a display direction of the content on the interface of the application A based on the obtained data.

Step S201 to step S210 in FIG. 13 is a sequence diagram when the auto-rotation function is enabled as the application A is started.

S201: The application A sends enabling information of an auto-rotation service to the sensorhidl procedure.

In this embodiment of this application, it may be set that when the application A runs at the foreground, the auto-rotation service is automatically enabled. For example, when the application A is a camera application, when the application A is started and runs at the foreground or switches from a background to the foreground, the application A sends the enabling information of the auto-rotation service to the sensorhidl procedure. In this embodiment of this application, starting the application A is used as a trigger condition for sending the enabling information of the auto-rotation service to the sensorhidl procedure. The enabling information indicates that the application A has enabled the auto-rotation service, and the acceleration sensor needs to report the collected data. After the application A is closed or switched to the background for running, whether the auto-rotation service is switched to a disabled state is related to whether a system-level auto-rotation function of a foldable-screen mobile phone is enabled. For example, if the system of the multi-screen terminal does not enable the auto-rotation service, after the application A is closed or switched to the background for running, the auto-rotation service of the multi-screen terminal is also in the disabled state. If the system of the multi-screen terminal enables the auto-rotation service, after the application A is closed or switched to the background for running, the auto-rotation service of the multi-screen terminal remains in an enabled state. Enabling of the system-level auto-rotation service may be triggered by an operation on the auto-rotation button in the system menu bar. The operation may be denoted as a second operation.

In addition, the enabling information of the auto-rotation service indicates that the application A has enabled the auto-rotation service. Therefore, the acceleration sensor needs to report data.

During specific implementation, the application A may invoke an enablesensor() interface for a sensor service at the application framework layer, and delivers a sampling parameter (for example, a sampling frequency or a sampling period) together with the invoking of the interface. The sensor service at the application framework layer sends an enable instruction to sensorhal, and the enable instruction may indicate the enabling information of the auto-rotation service.

In another embodiment of this application, it may alternatively be set that the application A does not have a capability of enabling the auto-rotation service when running at the foreground, but depends on whether the system-level auto-rotation function of the multi-screen terminal is enabled. For example, when the application A is a video playback application, after the auto-rotation service of the multi-screen terminal is enabled, when the application A is switched to the foreground for running or after the application A is started, the application A does not send the enabling information or disabling information of the auto-rotation service to sensorhidl. However, a direction of the content on the interface displayed when the application A runs at the foreground may be changed with rotation of the screen of the multi-screen terminal. After the auto-rotation service of the multi-screen terminal is disabled, the direction of the content on the interface displayed when the application A runs at the foreground may not be changed with rotation of the screen of the multi-screen terminal. In this case, the enabling information of the auto-rotation service is not sent to sensorhidl by the application A, but the enabling information or a disabling message of the auto-rotation service is sent to sensorhidl by another window management service that is in the system and that is responsible for enabling or disabling the auto-rotation service. In an example, when the user taps a virtual button "auto-rotation" in the drop-down menu, the window management service may be triggered to send the enabling information or the disabling information of the auto-rotation function to sensorhidl, and correspondingly, content on an interface of an application that runs at the foreground and that is of the multi-screen terminal automatically rotates.

In addition, because there is no logical order between a trigger condition (for example, when any application is switched to the secondary-screen display) of step S101 and the trigger condition (for example, when the application A is started) of step S201, during actual application, it does not mean that step S101 has to precede step S201.

S202: After receiving the enabling information of the auto-rotation service, sensorhidl sends an obtaining request for the data of the acceleration sensor to sensorpd-1 on the ADSP side through inter-processor communication.

S203: After receiving the obtaining request, sensorpd-1 on the ADSP side sends a collecting instruction to a main sensor, where the sampling instruction carries a sampling parameter.

During specific implementation, sensorpd-1 on the ADSP side invokes write_mask() in a set_accel_mode() function, and writes the sampling parameter to a register of the main sensor through an I2C, to trigger the main sensor to start sampling based on the sampling parameter. The sampling parameter may be a sampling rate or a sampling period of the main sensor. For example, both two sensors collect data in a first time period.

S204: sensorpd-1 on the ADSP side sends a sampling instruction to sensorpd-2 on the ADSP side.

The sampling instruction may carry the sampling parameter of the main sensor.

S205: sensorpd-2 on the ADSP side sends a sampling instruction to a secondary sensor, where the instruction carries a sampling parameter the same as that of the main sensor.

For a process in which sensorpd-2 on the ADSP side sends the sampling instruction to the secondary sensor, refer to a process in which sensorpd-1 on the ADSP side sends the collecting instruction to the main sensor. Because during the secondary-screen display, data collected by the secondary sensor needs to be used to replace data collected by the main sensor, it may be set that the main sensor and the secondary sensor use a same sampling parameter.

After S203, the main sensor reports, to sensorpd-1 on the ADSP side, main sensor data collected by the main sensor based on the sampling parameter. After S205, the secondary sensor reports, to sensorpd-1 on the ADSP side, secondary sensor data collected by the secondary sensor based on the sampling parameter.

Although sampling parameters of the main sensor and the secondary sensor are the same, during actual application, reporting moments of the main sensor and the secondary sensor may not be exactly the same.

S206: The main sensor reports the main sensor data to sensorpd-1 on the ADSP side.

S207: The secondary sensor reports the secondary sensor data to sensorpd-2 on the ADSP side.

S208: sensor pd-2 on the ADSP side sends the secondary sensor data to sensor pd-1.

During actual application, both the data reported by the main sensor and the data reported by the secondary sensor are stored in different storage spaces. After new data is stored in the storage space, data update information is sent to a corresponding thread, and the corresponding thread may obtain stored sensor data from the storage space. Therefore, after step S207, sensor pd-2 stores the received secondary sensor data in a storage space B. After new data is stored in the storage space B, data update information is sent to sensor pd-1, and when determining that the display state is the secondary-screen display, sensor pd-1 obtains the secondary sensor data from the storage space B. For ease of description, it is understood herein that sensor pd-2 sends the secondary sensor data to sensor pd-1.

S209: When the sensor data reported by the secondary sensor is received and a current display state flag bit indicates the secondary-screen display, the ADSP stores the secondary sensor data; and when the sensor data reported by the main sensor is received and the current display state flag bit indicates the secondary-screen display, the main sensor data is replaced with the stored secondary sensor data.

During specific implementation, a storage variable temp may be set. During the secondary-screen display, when the received sensor data is the secondary sensor data, the secondary sensor data is stored in the storage variable. During the secondary-screen display, when the received sensor data is the main sensor data, the currently received main sensor data is replaced with latest secondary sensor data stored in the storage variable. In this manner, the secondary sensor data can be transmitted to the application A without changing a process of reporting the sensor data by the main sensor of an operating system.

A specific example is as follows:

```
          if (state->rigid_body_type == 1 && g_subscreen_display_state == 100) {
          temp.x =opdata_cal.x;
          temp.y =opdata_cal.y;
          temp.z =opdata_cal.z;
          }
          if (state->rigid_body_type == 0 && g_subscreen_display_state == 100) {
          opdata_cal.x = temp.x;
          opdata_cal.y = temp.y;
          opdata_cal.z = temp.z;
          }
```

rigid_body_type indicates whether currently received sensor data is the main sensor data or the secondary sensor data. "0" indicates the main sensor data. "1" indicates the secondary sensor data.

g_subscreen_display_state indicates a current display state. "100" indicates the secondary-screen display.

temp.x indicates a storage variable on an x axis.

temp.y indicates a storage variable on a y axis.

temp.z indicates a storage variable on a z axis.

opdata_cal.x indicates a data identifier on the x axis in the data reported by the main sensor.

opdata_cal.y indicates a data identifier on the y axis in the data reported by the main sensor.

opdata_cal.z indicates a data identifier on the z axis in the data reported by the main sensor.

Although only one main sensor can register with the procedure of the operating system, to obtain data identifiers of the main sensor: opdata_cal.x, opdata_cal.y, and opdata_cal.z, during the main-screen display, the data of the main sensor (carrying a main sensor identifier) may continue to be transmitted to the application A, and during the secondary-screen display, the data of the secondary sensor (carrying a same main sensor identifier) may be transmitted to the application A in the foregoing manner.

During specific implementation, the latest secondary sensor data is stored in the storage variable. After the main sensor data is obtained, newly obtained main sensor data is replaced with the latest secondary sensor data in the storage variable. Even though moments at which the data collected by the main sensor and the data collected by the secondary sensor are reported are not exactly the same, a time difference is not longer than one sampling period. Usually, a sampling period of a sensor is very short, and a time period of a flipping action performed when the user flips the foldable-screen mobile phone may be longer than the sampling period. Therefore, there is no large delay from a viewing angle of the user.

Regardless of a folding angle between a first screen and a second screen, a value on the y axis of the main sensor is the same as a value on the y axis of the secondary sensor. Therefore, in the foregoing embodiment, there may be no process of storing the data on the y axis of the secondary sensor and replacing the data on the y axis of the main sensor. In this case, when the data is reported, the reported data is the data on the x axis of the secondary sensor, the data on the z axis of the secondary sensor, and the data on the y axis of the main sensor.

During actual application, when the user uses the foldable-screen mobile phone to switch to display an application interface between the main screen and the secondary screen, in most application scenarios, a body on which the main screen is located and a body on which the secondary screen is located are in a completely folded state, that is, the state shown in FIG. 10. Therefore, a value of the main sensor on the body on which the main screen is located and a value of the secondary sensor on the body on which the secondary screen is located are exactly the same in a y direction, and the two values have opposite directions in an x direction and in a z direction. Therefore, it may be set that if the currently received data is the main sensor data, and the current display state flag bit indicates the secondary-screen display, positive and negative reversing or directional rotation (where the directional rotation is 180°) is performed on an x value and a z value of the main sensor data.

A specific example is as follows:

```
          if (state->rigid_body_type == 0 && g_subscreen_display_state == 100) {
          opdata_cal.x = -opdata_cal.x;
          opdata_cal.z = -opdata_cal.z;
          }
 
```

rigid_body_type indicates whether currently received sensor data is the main sensor data or the secondary sensor data. "0" indicates the main sensor data. "1" indicates the secondary sensor data.

g_subscreen_display_state indicates a current display state. "100" indicates the secondary-screen display.

opdata_cal.x indicates a data identifier on the x axis in the data reported by the main sensor.

opdata_cal.z indicates a data identifier on the z axis in the data reported by the main sensor.

Values of data on the x axis and data on the z axis of the main sensor are set to be unchanged, and data on the x axis and data on the z axis of the secondary sensor are obtained by adding "-" signs in front. Data on the y axis of the main sensor remaining unchanged is data on the y axis of the secondary sensor. Correspondingly, if the main sensor data is currently received and the current display state flag bit indicates the main-screen display, the main sensor data (carrying the main sensor identifier) is directly transmitted to the application A.

In this way, a same data identifier may be used for transmission of the data on the three axes collected by the main sensor during the main-screen display, and transmission of the data on the three axes collected by the secondary sensor during the secondary-screen display.

Certainly, the secondary sensor data reported by the secondary sensor is not needed in this implementation. To be specific, the secondary sensor may be not disposed in the multi-screen terminal, or when the secondary sensor is disposed, the secondary sensor does not need to collect data, or when the secondary sensor is disposed, other conversion processing does not need to be performed on the data collected by the secondary sensor.

During actual application, a specific manner used may be selected depending on a specific structure of the multi-screen terminal and a target user group. A specific implementation is not limited in embodiments of this application.

S210: sensor pd-1 on the ADSP side sends the secondary sensor data to sensorhidl, where an identifier carried in the secondary sensor data is a registered main sensor identifier.

S211: sensorhidl reports the received secondary sensor data (carrying a data identifier of the main sensor) to the application A.

S212: After receiving the secondary sensor data, the application A determines a display direction of content on an interface based on the received sensor data.

In an example of determining a display direction of an icon on the interface based on the sensor data, in this embodiment of this application, the data collected by the acceleration sensor is divided into components in three directions, and a component in each direction is an acceleration component in the direction. When the multi-screen terminal is in a static state, the components in the three directions are components of gravity acceleration in the three directions.

An example of a configuration shown in FIG. 9 of the acceleration sensor in the foldable-screen mobile phone is used. Because the z axis is an acceleration component perpendicular to the display screen, when the display direction of the content on the interface is determined, the display direction may be determined based on the acceleration components on the x axis and the y axis. In FIG. 9, if a direction of the x axis is rightward, an opposite direction of the x axis is leftward, and if a direction of the y axis is upward, an opposite direction of the y axis is a downward.

If an acceleration component on the x axis is greater than an acceleration component on the y axis, and the acceleration component on the x axis is a positive value, the display direction of the icon is that the bottom of the icon faces toward the direction of the x axis, that is, rightward, and the top of the icon faces toward the opposite direction of the x axis, that is, leftward. If the acceleration component on the x axis is greater than the acceleration component on the y axis, and the acceleration component on the x axis is a negative value, the display direction of the icon is that the bottom of the icon faces toward the opposite direction of the x axis, that is, leftward, and the top faces toward a forward direction of the x axis, that is, rightward. If the acceleration component on the x axis is less than the acceleration component on the y axis, and the acceleration component on the y axis is a positive value, the display direction of the icon is that the bottom of the icon faces toward the direction of the y axis, that is, upward, and the top of the icon faces the opposite direction of the y axis, that is, downward. If the acceleration component on the x axis is less than the acceleration component on the y axis, and the acceleration component on the y axis is a negative value, the display direction of the icon is that the bottom of the icon faces toward the opposite direction of the y axis, that is, downward, and the top of the icon faces toward a forward direction of the y axis, that is, upward.

Certainly, when the user holds the multi-screen terminal, a jump may occur in the acceleration components in various directions of the sensor in the multi-screen terminal. To avoid a jump of the display direction of the displayed content, for example, an icon, another limitation may be set. For example, a limitation may be set in terms of two factors: duration and/or an acceleration component difference. When a difference between the acceleration component on the x axis and the acceleration component on the y axis is greater than or equal to a first threshold, and the duration is greater than a second threshold, a direction (where the bottom of the icon faces toward the direction) corresponding to a greater acceleration component is switched to; otherwise, a display direction at a previous moment is maintained. For example, when the difference between the acceleration component on the x axis and the acceleration component on the y axis is less than the first threshold, the display direction at the previous moment is maintained.

Based on the secondary-screen display flag in step S105, data synchronization logic in S209, and the determining the display direction of the content on the interface based on the secondary sensor data in step S212 in this example, it may be understood that, when the application A runs at the foreground, if the application A is displayed on the secondary screen, the application A receives the secondary sensor data, and the application A may determine, based on the secondary sensor data, the display direction of the content on the interface displayed on the secondary screen, so that occurrence of icon reversing shown in FIG. 8 can be reduced.

Correspondingly, in the scenario shown in FIG. 7, in either data collected by the main sensor or data collected by the secondary sensor, an acceleration component on a y axis is greater than an acceleration component on an x axis, and the acceleration component on the y axis is a negative value. Therefore, based on the foregoing descriptions, it may be understood that, when an interface of an application is displayed on the secondary screen in a portrait state, regardless of whether the data collected by the main sensor or the data collected by the secondary sensor is used, the bottom of an icon on the interface shown in FIG. 7 faces toward an opposite direction of the y axis, that is, downward, and the top of the icon faces toward a forward direction of the y axis, that is, upward. Similarly, a display direction of a preview image on the interface is the same as a display direction of the icon.

If the user rotates the foldable-screen mobile phone shown in FIG. 7 anticlockwise by approximately 90°, a display direction of content on the interface displayed on the secondary screen of the foldable screen may be determined in the following manners.

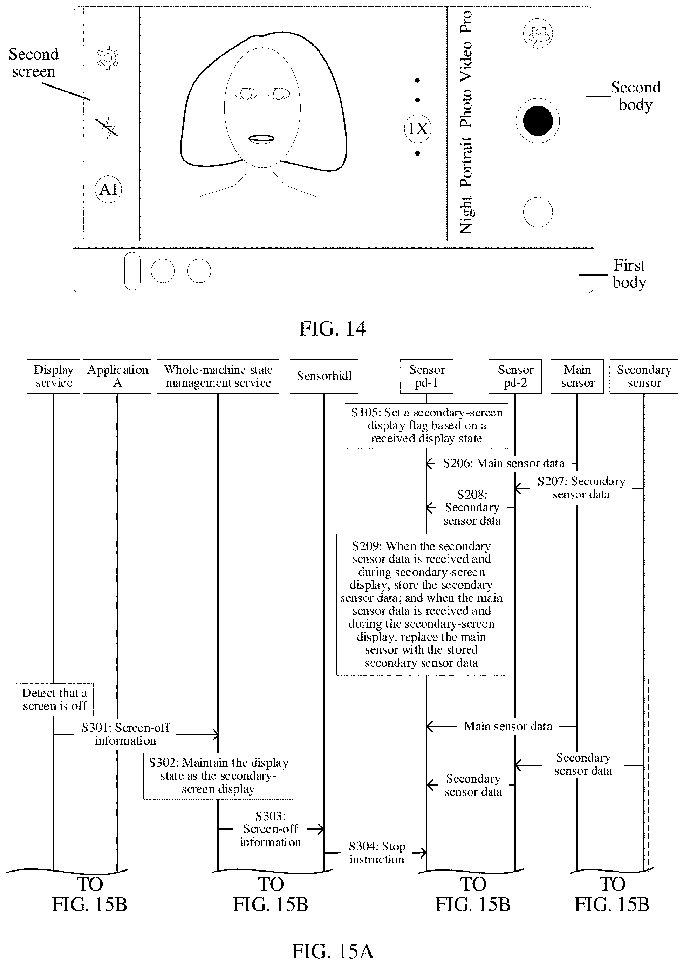

A schematic diagram of a state of the foldable-screen mobile phone is shown in FIG. 8 and FIG. 14.

A direction of a sensor shown in FIG. 9 is used as an example. If the display direction of the icon is determined based on the data collected by the main sensor, the acceleration component on the x axis of the main sensor is greater than the acceleration component on the y axis, and the acceleration component on the x axis is a negative value. Therefore, the bottom of the icon faces toward an opposite direction of the x axis, that is, leftward, to be specific, the bottom of the icon displayed on the second screen is located on a side of a folding axis, and the top of the icon is located on a side that is of the second screen and that is opposite to the folding axis, that is, the interface state shown in FIG. 8. Therefore, when an interface of an application is displayed on the secondary screen in a landscape state, if a display manner of content on the interface is determined based on the data collected by the main sensor below the main screen, incorrect display may occur, resulting in poor user experience.

A direction of a sensor shown in FIG. 9 is used as an example. If the display direction of the icon is determined based on the data collected by the secondary sensor, the acceleration component on the x axis of the secondary sensor is greater than the acceleration component on the y axis, and the acceleration component on the x axis is a positive value. Therefore, the bottom of the icon displayed on the second screen faces toward a side opposite to the folding axis, and the top of the icon is faces toward a side of the folding axis, that is, an interface state shown in FIG. 14. Therefore, when an interface of an application is displayed on the secondary screen in a landscape state, if a display manner of content on the interface is determined based on the data collected by the secondary sensor below the secondary screen, the icon and a preview picture on the interface may be presented in a display manner consistent with that from a user viewing angle.

In FIG. 14, the virtual buttons are rotated clockwise by 90° relative to the second screen of the foldable-screen mobile phone. For example, the "AI button", the "focal length identifier", the "camera switching button", and the like are rotated clockwise by 90° relative to the second screen of the foldable-screen mobile phone. The selfie picture is also rotated clockwise by 90° relative to the second screen of the foldable-screen mobile phone. From the viewing angle of the user, display directions of the virtual icons and selfie picture are a vertical forward direction, and this conforms to a viewing direction of the user. Therefore, the multi-screen terminal interface display method provided in embodiments of this application is used, so that some content displayed on the second screen may be correctly rotated when the second screen is used in the landscape state.

In the foregoing example, an example in which the screen is rotated anticlockwise by 90° is used. During actual application, correct rotation of the content on the interface can be implemented in a terminal interface display manner provided in the foregoing embodiments when the screen is rotated clockwise or by another angle.

In the foregoing example, the x axis, the y axis, and the z axis are merely used as examples. The y axis of the main sensor may be understood as an axis parallel to the folding axis between the main screen and the secondary screen. The z axis of the main sensor may be understood as an axis perpendicular to the main screen. The x axis of the main sensor may be understood as an axis perpendicular to a plane on which the y axis and the z axis of the main sensor are located. The y axis of the secondary sensor may be understood as an axis parallel to the folding axis between the main screen and the secondary screen, and is in a same direction with the y axis of the main sensor. The z axis of the main sensor may be an axis perpendicular to the main screen. When the screen on which the main sensor is located and the screen corresponding to the secondary sensor are unfolded into a same plane, the z axis of the main sensor and the z axis of the secondary sensor are in a same direction. The x axis of the main sensor is an axis perpendicular to a plane on which the y axis and the z axis of the secondary sensor are located. When the screen on which the main sensor is located and the screen corresponding to the secondary sensor are unfolded into a same plane, the z axis of the main sensor and the x axis of the secondary sensor are in a same direction.

As described above, the whole-machine state management service may store a latest display state of an application running at the foreground. Therefore, in embodiments of this application, correct display of a direction of content on an interface of the application displayed at the foreground after a screen-off event and a screen-on event may be implemented based on the display state that is of the foreground application and that is maintained by the whole-machine state management service.

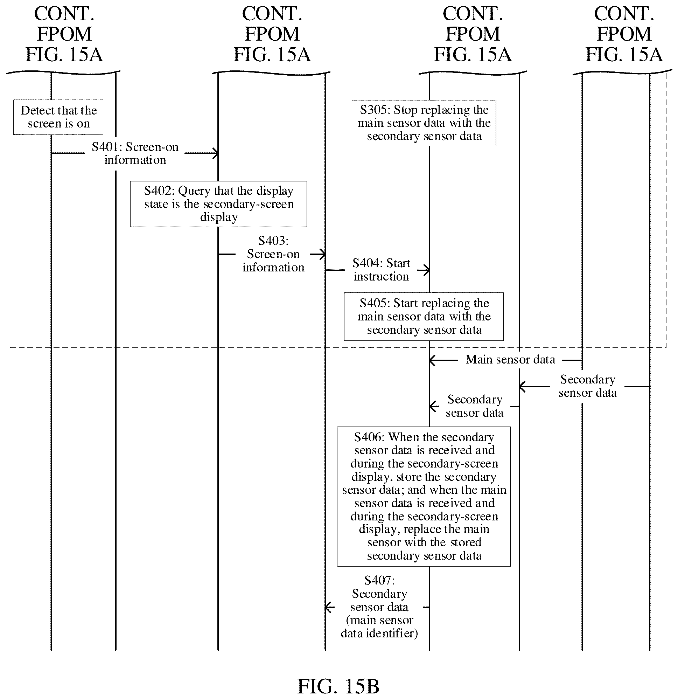

FIG. 15A and FIG. 15B are a sequence diagram of another application scenario of a multi-screen terminal interface display method according to an embodiment of this application. This application scenario may be a continuation scenario based on the sequence diagram shown in FIG. 13.

Only some steps in FIG. 13 are shown in the figure, and steps that are not shown may be described based on the descriptions in FIG. 13. In a scenario shown in FIG. 13, a multi-screen terminal displays an application A on a secondary screen.

S301: After detecting that a screen is off, a display service sends screen-off information to a whole-machine state management service.

In this embodiment of this application, the multi-screen terminal may trigger, by using a physical key or another triggering process, the multi-screen terminal to enter a screen-off state. After the multi-screen terminal enters the screen-off state, the screen-off information of the multi-screen terminal may be sent by the display service of a system to the whole-machine state management service. An operation that a user taps the physical key to trigger the screen of the multi-screen terminal to be off may be denoted as a third operation.

S302: After receiving the screen-off information, the whole-machine state management service maintains a display state as secondary-screen display (where the state is denoted as a first state).

In this embodiment of this application, from a perspective of user experience, when the application A is displayed on the secondary screen before the screen is off last time, and the application A is not killed when a screen-on instruction is received, the user expects that in an instant the screen is on, a last interface of the application A continues to be displayed on the secondary screen, and displayed content on the last interface of the application A is in a correct direction. Therefore, when the screen is off, the display state in the whole-machine state management service may also be maintained as the secondary-screen display.

S303: The whole-machine state management service sends the screen-off information to a sensorhidl procedure.

S304: The sensorhidl procedure sends a stop instruction to sensorpd-1 on an ADSP side.

Data collected by an acceleration sensor in the multi-screen terminal not only can be applied to the scenario in this embodiment of this application, but also can be applied to detection in another scenario when the multi-screen terminal is in the screen-off state, for example, detection that a mobile phone in the screen-off state is picked up by the user and detection of reversing in the screen-off state. Therefore, when the multi-screen terminal is in the screen-off state, a main sensor and a secondary sensor can continue to collect data. However, in this embodiment of this application, the data collected by the main sensor and the data collected by the secondary sensor do not need to be used to determine a display direction. Therefore, during specific implementation, after the whole-machine state management service sends the stop instruction to sensorhidl, sensorhidl invokes a state monitoring unit to send the screen-off information, and the state monitoring unit triggers, based on the screen-off information, a data switching switch to send the stop instruction to a data synchronization unit.

S305: After receiving the stop instruction, sensorpd-1 on the ADSP side stops replacing main sensor data with secondary sensor data, and also stops a process of reporting sensor data to the application A in this embodiment of this application, to be specific, stops step S209 and a subsequent process in the sequence diagram shown in FIG. 13. However, the main sensor data and the secondary sensor data may be transmitted to another application in another manner. This is not limited in embodiments of this application.

S401: After detecting that the screen is on, the display service sends screen-on information to the whole-machine state management.

The multi-screen terminal may trigger, by using an operation (or a gesture) on the physical key, the multi-screen terminal to start a screen-on process. After the multi-screen terminal starts the screen-on process, when the application A is displayed on the secondary screen before the screen is off last time, and the application A is not killed (where in the screen-off state, the application A may be killed due to a memory reclaim mechanism) when the screen-on information is received, a process of starting the application A on the secondary screen is performed. An operation of triggering the multi-screen terminal from the screen-off state to a screen-on state is denoted as a fourth operation.

In a process of performing the foregoing process, the screen-on information of the multi-screen terminal may be sent by the display service of the system to the whole-machine state management service.

S402: The whole-machine state management service queries that the display state is the secondary-screen display.

In this embodiment of this application, after a screen-off event and a screen-on event occur, the display state in the whole-machine state management service continues to remain in a latest display state before the screen-off event, that is, the secondary-screen display, and therefore, a query result is the secondary-screen display.

S403: The whole-machine state management service sends the screen-on information to sensorhidl.

S404: After receiving the screen-on information, sensorhidl sends a start instruction to sensorpd-1 on the ADSP side.

During specific implementation, sensorhidl may invoke the state monitoring unit and the data switching switch to perform the following process: The state monitoring unit may receive the screen-on information, and the state monitoring unit triggers, based on the received screen-on information, the data switching switch to send the start instruction to sensorpd-1 on the ADSP side.

S405: After receiving the start instruction of data synchronization, sensorpd-1 on the ADSP side starts replacing the main sensor data with the secondary sensor data.

S406: When the sensor data reported by the secondary sensor is received and a current display state flag bit indicates the secondary-screen display, sensorpd-1 on the ADSP side stores the secondary sensor data; and when the sensor data reported by the main sensor is received and the current display state flag bit indicates the secondary-screen display, the main sensor data is replaced with the stored secondary sensor.

S407: sensorpd-1 on the ADSP side reports the secondary sensor data (carrying a data identifier of the main sensor) to sensorhidl.

For a subsequent execution process, refer to steps after step S210 in the sequence shown in FIG. 13.

Because a process of starting the application A also needs time, before a first interface of the application A is drawn, the application A has received the secondary sensor data (carrying the main sensor identifier). Therefore, content of an interface of the application A that is displayed on the secondary screen of the multi-screen terminal has a correct display direction. Certainly, during actual application, even though the application A receives the secondary sensor data (carrying the main sensor identifier) after the first interface of the application A is drawn and displayed, the interface of the application A can be quickly and correctly displayed after the sensor data is received.

Therefore, in a manner in which the whole-machine state management service maintains, during the screen-off state, the latest display state before the screen is off, the multi-screen terminal can continue to directly perform, after the screen is on, a process of determining a display direction of content on an interface during the secondary-screen display in a scenario in which the application A is displayed on the secondary screen, so that the content on the interface of the application A can be correctly displayed quickest.

In some application scenarios, an exception may occur on an application, for example, when an application displayed on a secondary screen crashes, the application displayed on the secondary screen fails to report a display state, or a main screen incorrectly reports that the display state is secondary-screen display. Consequently, the display state in a whole-machine state management service may be incorrect, and chaos may occur in main and secondary sensor data in a data synchronization unit. Therefore, an embodiment of this application further provides an automatic recovery solution for an exception scenario, so that a state is automatically recovered to a normal state after a screen-off event and a screen-on event sequentially occur.

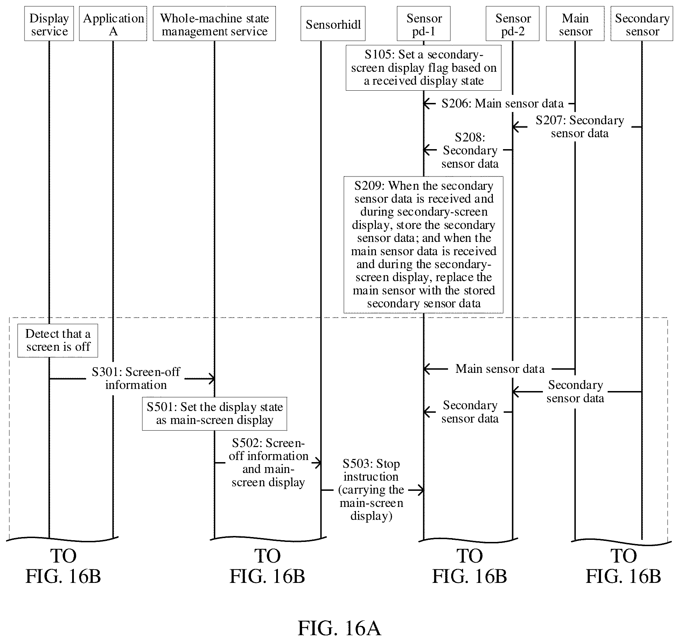

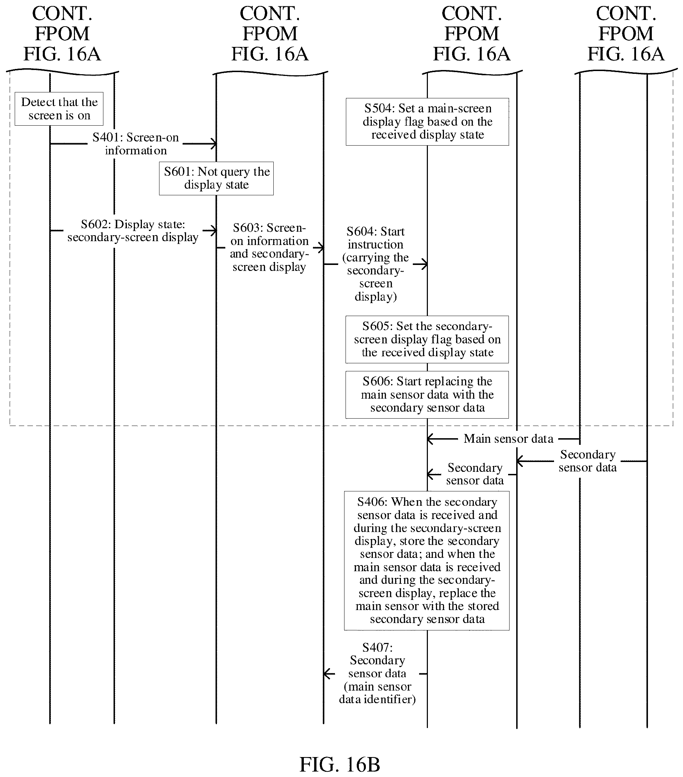

FIG. 16A and FIG. 16B are a sequence diagram of another application scenario of a multi-screen terminal interface display method according to an embodiment of this application.

A difference between the sequence diagram and the sequence shown in FIG. 15A and FIG. 15B lies in the following.

When the multi-screen terminal performs a screen-off process, after the whole-machine state management service receives the screen-off information in step S301, S501 and subsequent steps are performed.

S501: The whole-machine state management service sets a display state as main-screen display (where the state is denoted as a second state).

S502: When the display state is a screen-off state and the main-screen display, the whole-machine state management service sends, to sensorhidl, information about the screen-off state and the main-screen display.

S503: After receiving the information about the screen-off state and the main-screen display, sensorhal sends a stop instruction to sensorpd-1 on an ADSP side, where the instruction may carry the information about the main-screen display.

After receiving the information about the main-screen display by invoking a state monitoring unit, sensorhidl sends the stop instruction (carrying the information about the main-screen display) to sensorpd-1 by invoking a data switching switch.

S504: After receiving the stop instruction, sensorpd-1 on the ADSP side sets the display state to a main-screen display flag.

After step S504, for main sensor data and secondary sensor data on the ADSP side, a process of reporting by the main sensor has been recovered. Even though chaos occurs in the main sensor and a secondary sensor previously, a chaos state has been eliminated.

Because a display state flag bit is set to the main-screen display flag, a process of stopping replacing the main sensor data with the secondary sensor data may not be performed.

When the multi-screen terminal performs a screen-on process, after the whole-machine state management service receives the screen-on information in step S401, S601 and subsequent steps are performed.

S601: The whole-machine state management service does not query the display state stored in the whole-machine state management service.

S602: The whole-machine state management service receives that the display state sent by a display service is secondary-screen display.

When an application A continues to be displayed on a secondary screen after the screen is on, the display service may further send the display state, that is, the secondary-screen display, to the whole-machine state management service.

S603: The whole-machine state management service sends the screen-on information and the display state of the secondary-screen display to sensorhidl.

S604: sensorhidl sends a start instruction to sensorpd-1 on the ADSP side, where the start instruction carries information about the secondary-screen display.

After receiving the information about the secondary-screen display by invoking the state monitoring unit, sensorhidl determines to switch to a secondary-screen display state, and invokes the data switching switch to send the start instruction (carrying the information about the secondary-screen display) to sensorpd-1 on the ADSP side.

S605: After receiving the start instruction carrying the secondary-screen display, sensorpd-1 on the ADSP side sets a secondary-screen display flag.

S606: sensorpd-1 on the ADSP side starts replacing the main sensor data with the secondary sensor data.

Certainly, during actual application, the starting replacing the main sensor data with the secondary sensor data may alternatively not be performed. Instead, when the display state flag bit is the secondary-screen display flag, the secondary sensor data is used to replace the main sensor data.

S406: When the sensor data reported by the secondary sensor is received and a current display state flag bit indicates the secondary-screen display, sensorpd-1 on the ADSP side stores the secondary sensor data; and when the sensor data reported by the main sensor is received and the current display state flag bit indicates the secondary-screen display, the main sensor data is replaced with the stored secondary sensor.

S407: sensorpd-1 on the ADSP side reports the secondary sensor data (a data identifier of the main sensor) to sensorhidl.

For a subsequent execution process, refer to steps after step S210 in the sequence shown in FIG. 13.

In this embodiment of this application, after the multi-screen terminal re-enters the screen-on process, in the process of starting the application A and displaying the application A on the secondary screen in the sequence diagram shown in FIG. 13, the application A sends the display state to the whole-machine state management service, and the whole-machine state management service performs a subsequent process based on a latest received display state. Therefore, when the application A continues to be displayed on the secondary screen after the screen is on, the application A may further continue to determine the display direction of the content on the interface based on the secondary sensor data (carrying a main sensor identifier).

According to the multi-screen terminal interface display method provided in this embodiment of this application, a secondary-screen display state may be recovered to a main-screen display state through one screen-off event, so that the ADSP side returns to a process of transmitting the main sensor data to an upper-layer application. When the screen is on again, if the application A is not killed and the application A is still displayed on the secondary screen, the application A is triggered to send the secondary-screen display state to the whole-machine state management service based on a trigger condition that the application A runs at a foreground and is displayed on the secondary screen during a screen-on event, the whole-machine state management service stores the secondary-screen display state, and a subsequent process continues, so that a display state identifier in the ADSP is updated to the secondary-screen display flag, to recover a process of transmitting the secondary sensor data during the secondary-screen display.

The foregoing embodiments all describe the multi-screen terminal interface display method provided in embodiments of this application by using an example of a selfie interface in which the application A is a camera application. During actual application, when the multi-screen terminal displays, on the secondary screen, an interface of a picture (that is, a photo preview interface of the picture) that has been taken by the application A, the multi-screen terminal interface display method provided in embodiments of this application is also applicable. Certainly, when another application is displayed on the secondary screen after the multi-screen terminal starts the auto-rotation service, the multi-screen terminal interface display method provided in embodiments of this application may also be applicable.

The main acceleration sensor and the secondary acceleration sensor that are provided in embodiments of this application are merely examples of the main sensor and the secondary sensor. During actual application, a main ambient light sensor located on a side of the main screen and a secondary ambient light sensor located on a side of the secondary screen are also applicable to operations performed by the data synchronization unit in the multi-screen terminal interface display method provided in embodiments of this application, except that after obtaining data, the upper-layer application adjusts brightness of a display screen based on the sensor data. Certainly, other sensors of a same type located on different screens of the multi-screen terminal are also applicable to operations performed by the data synchronization unit provided in the examples of this application.

It should be understood that the order of the sequence numbers of the steps in the foregoing method embodiments does not mean the order of execution, and the execution order of each process is determined by function and inherent logic of the process, and should not constitute any limitation on the implementation process of embodiments of this application.

An embodiment of this application further provides a computer-readable storage medium. The computer-readable storage medium stores a computer program. When the computer program is executed by a processor, steps in the foregoing method embodiments may be implemented.

An embodiment of this application further provides a computer program product. When the computer program product runs on a multi-screen terminal, the multi-screen terminal is enabled to implement steps in the foregoing method embodiments.

When an integrated unit is implemented in a form of a software functional unit and sold or used as an independent product, the integrated unit may be stored in a computer-readable storage medium. Based on this understanding, all or some of processes of the method in the foregoing embodiments may be implemented by a computer program instructing relevant hardware in this application. The computer program may be stored in a computer-readable storage medium. When the computer program is executed by a processor, steps in the foregoing method embodiments may be implemented. The computer program includes computer program code. The computer program code may be in a source code form, an object code form, an executable file, some intermediate forms, or the like. The computer-readable medium may include at least: any entity or apparatus that can carry computer program code to a first device, a recording medium, a computer memory, a read-only memory (ROM, Read-Only Memory), a random access memory (RAM, Random Access Memory), an electric carrier signal, a telecommunication signal, and a software distribution medium, for example, a USB flash drive, a removable hard disk, a magnetic disk, or an optical disc. In some jurisdictions, according to legislation and patent practices, the computer-readable medium may not be an electrical carrier signal or a telecommunication signal.

An embodiment of this application further provides a chip system. The chip system includes a processor. The processor is coupled to a memory. The processor executes a computer program stored in the memory, to implement steps in any method embodiment of this application. The chip system may be a single chip or a chip module including a plurality of chips.

In the foregoing embodiments, the descriptions of embodiments have respective focuses. For a part that is not described in detail or recorded in an embodiment, refer to related descriptions in another embodiment.

A person of ordinary skill in the art may be aware that the examples of the units and method steps described with reference to embodiments disclosed in this specification can be implemented in electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing embodiments are merely used for describing the technical solutions of this application, but are not intended to limit this application. Although this application is described in detail with reference to the foregoing embodiments, a person of ordinary skill in the art should understand that modifications may still be made to the technical solutions described in the foregoing embodiments, or equivalent replacements may be made to the part of the technical features. Such modifications or replacements do not cause the essence of corresponding technical solutions to depart from the spirit and scope of the technical solutions in embodiments of this application and shall fall within the protection scope of this application.

## Claims

1. An interface display method, applied to a terminal device, wherein the terminal device comprises a first sensor, a second sensor, and a display screen, and the display screen comprises a first screen and a second screen; when the terminal device is unfolded, the first sensor is located below the first screen, the second sensor is located below the second screen, and display directions of the first screen and the second screen are the same; and when the terminal device is folded, the display directions of the first screen and the second screen are opposite; and the method comprises:
displaying, by the terminal device, a first interface of a first application on the first screen;
obtaining, by the terminal device through the first application in a process of displaying the first interface on the first screen, data collected by the first sensor;
rotating, by the terminal device in a process of rotating the first screen anticlockwise by 90°, a first icon on the first interface clockwise by 90° relative to the first screen based on the data collected by the first sensor;
receiving, by the terminal device, a first operation of switching to the second screen for displaying the first application;
displaying, by the terminal device, a second interface of the first application on the second screen in response to the first operation, wherein the second interface is an interface obtained after the first interface is adapted to the second screen, and the second interface comprises the first icon;
obtaining, by the terminal device through the first application in a process of displaying the second interface on the second screen, data collected by the second sensor; and
rotating, by the terminal device in a process of rotating the second screen anticlockwise by 90°, the first icon on the second interface clockwise by 90° relative to the second screen based on the data collected by the second sensor.

2. The method according to claim 1, wherein the obtaining, by the terminal device through the first application in a process of displaying the second interface on the second screen, data collected by the second sensor comprises:
obtaining, by the terminal device, the data collected by the second sensor, wherein the data collected by the second sensor is second data;
if the second interface of the first application is displayed on the second screen, storing, by the terminal device, the data collected by the second sensor;
obtaining, by the terminal device, the data collected by the first sensor, wherein the data collected by the first sensor is first data;
if the second interface of the first application is displayed on the second screen, replacing, by the terminal device, the data collected by the first sensor with the stored data collected by the second sensor, to obtain replaced data of the first sensor, wherein the replaced data of the first sensor is the second data collected by the second sensor; and
obtaining, by the terminal device, the replaced data of the first sensor through the first application.

3. The method according to claim 1, wherein the terminal device comprises a first processor and a second processor, the first application runs on the first processor, and after the terminal device displays the second interface of the first application on the second screen, the method further comprises:
sending, by the first processor, second information to the second processor, wherein the second information indicates displaying on the second screen; and
after receiving the second information, setting, by the second processor, a display state flag bit to a second flag, wherein the second flag indicates displaying on the second screen; and
the obtaining, by the terminal device through the first application in a process of displaying the second interface on the second screen, data collected by the second sensor comprises:
obtaining, by the second processor, the data collected by the second sensor, wherein the data collected by the second sensor is second data;
when the display state flag bit in the second processor is the second flag, storing, by the second processor, the data collected by the second sensor;
obtaining, by the second processor, the data collected by the first sensor, wherein the data collected by the first sensor is first data;
when the display state flag bit in the second processor is the second flag, replacing, by the second processor, the data collected by the first sensor with the stored data collected by the second sensor, wherein replaced data of the first sensor is the second data collected by the second sensor;
sending, by the second processor, the replaced data of the first sensor to the first application of the first processor; and
obtaining, by the first application of the first processor, the replaced data of the first sensor.

4. The method according to claim 1, wherein when the terminal device is folded, data that is of the first sensor and that is in a first direction and data that is of the second sensor and that is in the first direction have a same value and opposite directions, data that is of the first sensor and that is in a second direction and data that is of the second sensor and that is in the second direction have a same value and opposite directions, and data that is of the first sensor and that is in a third direction and data that is of the second sensor and that is in the third direction have a same value and a consistent direction; and
the obtaining, by the terminal device through the first application in a process of displaying the second interface on the second screen, data collected by the second sensor comprises:
obtaining, by the terminal device, the data collected by the second sensor, wherein the data collected by the second sensor is second data;
obtaining, by the terminal device, the data collected by the first sensor, wherein the data collected by the first sensor is first data;
if the second interface of the first application is displayed on the second screen, performing, by the terminal device, direction reversing on the data in the first direction and the data in the second direction that are in the data collected by the first sensor; and
obtaining, by the terminal device through the first application, data obtained by performing direction reversing on the data collected by the first sensor.

5. The method according to claim 1, wherein the terminal device comprises a first processor and a second processor, the first application runs on the first processor; and after the terminal device displays the second interface of the first application on the second screen, the method further comprises:
sending, by the first processor, second information to the second processor, wherein the second information indicates displaying on the second screen; and
after receiving the second information, setting, by the second processor, a display state flag bit to a second flag, wherein the second flag indicates displaying on the second screen; and
the obtaining, by the terminal device through the first application in a process of displaying the second interface on the second screen, data collected by the second sensor comprises:
obtaining, by the second processor, the data collected by the second sensor, wherein the data collected by the second sensor is second data;
obtaining, by the second processor, the data collected by the first sensor, wherein the data collected by the first sensor is first data;
when the display state flag bit in the second processor is the second flag, performing, by the second processor, direction reversing on data in a first direction and data in a second direction that are in the data collected by the first sensor;
sending, by the second processor to the first application of the first processor, data obtained by performing direction reversing on the data collected by the first sensor; and
obtaining, by the first application of the first processor, the data obtained by performing direction reversing on the data collected by the first sensor.

6. The method according to any one of claims 1 to 5, wherein the first interface of the first application comprises a first screen switching button, and the first operation is an operation performed on the first screen switching button; or
the first operation is a gesture operation performed on the first screen; or
a system menu bar comprises a second screen switching button, and the first operation is an operation performed on the second screen switching button.

7. The method according to any one of claims 1 to 5, wherein the method further comprises:
after the first application is started, obtaining, by the terminal device, the first data collected by the first sensor in a first time period, and obtaining, by the terminal device, the second data collected by the second sensor in the first time period; or
after receiving a second operation, obtaining, by the terminal device, the first data collected by the first sensor in a first time period, and obtaining, by the terminal device, the second data collected by the second sensor in the first time period, wherein the second operation is an operation performed on an auto-rotation button in a system menu bar.

8. The method according to any one of claims 1 to 7, wherein after the terminal device displays the second interface of the first application on the second screen in response to the first operation, the method further comprises:
receiving, by the terminal device, a third operation;
turning off, by the terminal device, the display screen in response to the third operation;
receiving, by the terminal device, a fourth operation;
turning on, by the terminal device, the display screen in response to the fourth operation, and displaying the second interface of the first application on the second screen;
obtaining, by the terminal device through the first application in a process of displaying the second interface on the second screen, the data collected by the second sensor; and
rotating, by the terminal device in a process of rotating the second screen anticlockwise by 90°, the first icon on the second interface clockwise by 90° relative to the second screen based on the data collected by the second sensor.

9. The method according to claim 8, wherein the terminal device comprises the first processor and the second processor, and the first application runs on the first processor; and
after the terminal device displays the second interface of the first application on the second screen in response to the first operation, the method further comprises:
setting, by the first processor, a display state to a first state, wherein the first state indicates displaying on the second screen;
after setting the display state to the first state, sending, by the first processor, a start instruction and second information to the second processor, wherein the second information indicates displaying on the second screen;
after receiving the second information, setting, by the second processor, the display state flag bit to the second flag; and
after receiving the start instruction, starting, by the second processor, a replacement operation, wherein the replacement operation is an operation of replacing, when the display state flag bit is the second flag, the data collected by the first sensor with the data collected by the second sensor.

10. The method according to claim 9, wherein after the terminal device turns off the display screen, the method further comprises:
maintaining, by the first processor, the display state as the first state;
sending, by the first processor, a stop instruction to the second processor; and
after receiving the stop instruction, stopping, by the second processor, the replacement operation;
after the terminal device displays the second interface of the first application on the second screen in response to the fourth operation, the method further comprises:
querying, by the first processor, that the display state is the first state;
sending, by the first processor, a start instruction to the second processor based on the first state that is found; and
after receiving the start instruction, starting, by the second processor, a replacement operation; and
the obtaining, by the terminal device through the first application in a process of displaying the second interface on the second screen, the data collected by the second sensor comprises:
after the replacement operation is started, if the display state flag bit is the second flag, replacing, by the second processor, the data collected by the first sensor with the data collected by the second sensor; and
sending, by the second processor, replaced data of the first sensor to the first processor.

11. The method according to claim 9, wherein after the terminal device turns off the display screen, the method further comprises:
setting, by the first processor, the display state to a second state, wherein the second state indicates displaying on the first screen;
sending, by the first processor, a stop instruction and first information to the second processor;
after receiving the stop instruction, stopping, by the second processor, the replacement operation; and
after receiving the first information, setting, by the second processor, the display state flag bit to a first flag; and
after the terminal device displays the second interface of the first application on the second screen in response to the fourth operation, the method further comprises:
setting, by the first processor, the display state to the first state;
after setting the display state to the first state, sending, by the first processor, a start instruction and second information to the second processor;
after receiving the second information, setting, by the second processor, the display state flag bit to the second flag; and
after receiving the start instruction, starting, by the second processor, a replacement operation.

12. The method according to any one of claims 9 to 11, wherein the obtaining, by the terminal device through the first application in a process of displaying the second interface on the second screen, the data collected by the second sensor comprises:
after the replacement operation is started, if the display state flag bit is the second flag, replacing, by the second processor, the data collected by the first sensor with the data collected by the second sensor;
sending, by the second processor, replaced data of the first sensor to the first processor, wherein the replaced data of the first sensor is the data collected by the second sensor; and
obtaining, by the first processor, the replaced data of the first sensor through the first application.

13. A terminal device, wherein the terminal device comprises a processor, and the processor is configured to run a computer program stored in a memory, to enable the terminal device to implement the method according to any one of claims 1 to 12.

14. A computer-readable storage medium, wherein the computer-readable storage medium stores a computer program, and when the computer program is executed by one or more processors, the method according to any one of claims 1 to 12 is implemented.
